# EUROPÄISCHE PATENTSCHRIFT

(11) **EP 2 598 894 B1**
(45) Veröffentlichungstag und Bekanntmachung des Hinweises auf die Patenterteilung: **15.04.2015**
(21) Anmeldenummer: 11749107.6
(22) Anmeldetag: 25.07.2011
(51) Int. Cl.: G01P 15/08, G01P 15/18

(54) **VORRICHTUNG UND VERFAHREN ZUR ERFASSUNG MINDESTENS EINER BESCHLEUNIGUNG SOWIE EIN ENTSPRECHENDES COMPUTERPROGRAMM UND EIN ENTSPRECHENDES COMPUTERLESBARES SPEICHERMEDIUM SOWIE VERWENDUNG EINER SOLCHEN VORRICHTUNG**
DEVICE AND METHOD FOR RECORDING AT LEAST ONE ACCELERATION AND A CORRESPONDING COMPUTER PROGRAM AND A CORRESPONDING COMPUTER-READABLE STORAGE MEDIUM AND ALSO USE OF SUCH A DEVICE
DISPOSITIF ET PROCÉDÉ SERVANT À DÉTECTER AU MOINS UNE ACCÉLÉRATION, PROGRAMME INFORMATIQUE CORRESPONDANT, SUPPORT DE MÉMOIRE INFORMATIQUE CORRESPONDANT ET UTILISATION D'UN DISPOSITIF DE CE TYPE

(30) Priorität: 27.06.2011 DE 102011078135; 16.05.2011 DE 102011102035; 27.07.2010 DE 102010032797
(43) Veröffentlichungstag der Anmeldung: 05.06.2013
(73) Patentinhaber: First Sensor AG, 12459 Berlin (DE)
(72) Erfinder: HANSEN, Jens, 12109 Berlin (DE)
(74) Vertreter: Gulde & Partner
(86) Internationale Anmeldenummer: PCT/EP2011/062727
(87) Internationale Veröffentlichungsnummer: WO 2012/013627

(56) Entgegenhaltungen:
- EP-A1- 0 937 985
- WO-A1-2005/036108
- DE-A1- 19 807 124

## Beschreibung

Die Erfindung betrifft eine Vorrichtung und ein Verfahren zur Erfassung mindestens einer Beschleunigung sowie ein entsprechendes Computerprogramm und ein entsprechendes computerlesbares Speichermedium. Die Erfindung betrifft weiter die Verwendung einer zur getrennten Erfassung einer statischen und einer dynamischen Beschleunigung geeigneten Vorrichtung sowie ein entsprechendes Computerprogramm und ein entsprechendes computerlesbares Speichermedium, wobei die Verwendung insbesondere die Analyse und/oder Steuerung von Bewegungen umfasst.

Dynamikrekorder werden in zunehmendem Maße eingesetzt, sei es als Fahrtenschreiber, zur Navigation, zur Steuerung von Maschinen, zur Erkennung von Bewegungen im Sport bis zur Steuerung von Computerspielen.

Die Anwendungsbreite täuscht jedoch über die Tatsache hinweg, dass es sich bei den meisten zu erfassenden Bewegungen um dynamische Sonderfälle handelt, denn konventionelle Beschleunigungssensoren sind nicht in der Lage, sogenannte statische Beschleunigung von dynamischer Beschleunigung zu trennen.

Bei dem allgemeinen Fall eines dynamischen Vorgangs jedoch treten beide Beschleunigungsformen in Überlagerungen auf. Die Änderung der Position des zu erfassenden Gegenstandes gegenüber der horizontalen Ebene bestimmt in gleicher Weise den dynamischen Vorgang, wie seine Bewegung.

Sämtliche konventionelle Sensoren können daher nur mit Einschränkungen verwendet werden, etwa wenn eine Beschleunigungsform vernachlässigbar gering ist, ein Beschleunigungsverlauf bekannt ist oder wenn ihr Zeitverhalten derart unterschiedlich ist, dass eine elektronische Filterung möglich wird, etwa bei der Erfassung höher frequenter Vibrationen.

Das gemeinsame Prinzip sämtlicher konventioneller Beschleunigungssensoren ist die Messung der Kraft, die durch Einwirkung einer Beschleunigung auf ein federnd oder elastisch gelagertes Masseelement entsteht. Am Markt werden verschiedene Ausführungsformen in Anpassung an unterschiedliche Applikationen hinsichtlich Auflösung, Messbereich, Baugröße, Preis etc. angeboten. So gibt es Sensoren, bei welchen beispielsweise die auf das Masseelement einwirkende Kraft direkt - etwa über ein piezokeramisches Element - und andere, bei welchen diese indirekt über die durch die Kraft hervorgerufene Auslenkungen des elastischen Masseträgers kapazitiv, induktiv, resistiv oder opto-elektronisch erfasst wird. Entsprechend existieren zahlreiche Varianten bei der Realisierung des Trägers des Masseelements. Stand der Technik sind auch verschiedene Realisierungsmöglichkeiten einer hohen Richtcharakteristik sowie orthogonale Positionierungen von Sensoren zur Erfassung der Raumkomponenten von Beschleunigungskräften aus beliebigen Richtungen.

Das sämtlichen Ausführungsformen zugrundeliegende Prinzip lässt jedoch wie o.a. eine Unterscheidung von statischer und dynamischer Beschleunigung nicht zu. Es kann nicht gesagt werden, ob eine auf das Masseelement einwirkende Kraft durch Bewegungsbeschleunigung oder die Gravitation hervorgerufen wird.

Hierdurch lassen sich selbst einfache dynamische Vorgänge, wie das Verrutschen eines Gegenstandes auf einer schiefen Ebene oder eine Handbewegung nicht erfassen.

Die einzige Möglichkeit, die beiden Beschleunigungsformen zu trennen, besteht in der Anwendung eines Kreiselsystems, da die Kreiselebene einen von der Auflageebene des Kreisels und von Beschleunigungen unabhängigen Bezug darstellt.

Aufgrund der äußerst komplexen Mechanik, die zur Realisierung des rotierenden Systems erforderlich ist, sind Kreiselsysteme nur für eine begrenzte Zahl von Anwendungen geeignet. Auch über Gyratoren ist die Erkennung des Winkels des Sensors gegenüber der horizontalen Ebene nicht möglich, da diese nur kurzzeitige Winkeländerungen, also Relativwerte und nicht Absolutwerte erfassen.

Die Realisierung eines Sensorsystems zur Trennung von statischer und dynamischer Beschleunigung mit ausschließlich ruhenden Elementen wird derzeit nicht für möglich gehalten.

Zur Umgehung der Kreiseltechnologie werden gegenwärtig Verfahren untersucht, welche auf einer gepulsten Lichtleiterstrecke basieren. Die erforderliche Länge des Lichtleiters liegt jedoch zwischen 200 m und 2 km. Diese Untersuchungen belegen das große Interesse an Alternativlösungen zur Kreiseltechnologie, ohne jedoch bisher zu praktischen Lösungen gekommen zu sein.

Bedingt durch diese Probleme sind auch die Einsatzmöglichkeiten der herkömmlichen Sensorsysteme stark eingeschränkt.

Auf dem Gebiet der Erfindung ist aus der internationalen Patentanmeldung WO 2005/036108 A1 ein Fahrzeugsensor zur Erfassung einer Beschleunigung und von Körperschall bekannt. Der Fahrzeugsensor kann Schwingungen in Frequenzbereichen erfassen, die sowohl durch eine Beschleunigung als auch durch Körperschall verursacht werden. Der Sensor weist dabei folgendes auf: einen Messwertaufnehmer, der die Beschleunigung und den Körperschall erfassen kann, einen Träger zur Fixierung des Messwertaufnehmers an einem Fahrzeugelement, ein Sensorgehäuse, eine seismische Masse zur Erfassung der Beschleunigung und eine Verarbeitungseinheit zur Verarbeitung von Messwertaufnehmersignalen.

In der Offenlegungsschrift DE 198 07 124 A1 wird ein Verfahren und eine Vorrichtung zum Auslösen eines Rückhaltesystems beschrieben. Die Vorrichtung weist eine Beschleunigungssensoranordnung auf mit zwei in unterschiedlichen Richtungen orientierten Empfindlichkeitsachsen. Die bezüglich einer der beiden Empfindlichkeitsachsen gemessene Beschleunigung wird zur Plausibilitätsprüfung einer Auslöseentscheidung herangezogen, welche aus der bezüglich der anderen Empfindlichkeitsachse gemessenen Beschleunigung hergeleitet wird.

Die Veröffentlichung EP 0 937 985 A1 betrifft einen Beschleunigungssensor und ein Herstellungsverfahren dafür. Der Sensor ist zu einem Teil aus einem Siliziummaterial gefertigt, welches bei einer Beschleunigung verformt wird, während ein anderer Teil des Sensors ein Hilfssubstrat, eine Abdeckung und eine Massensubstanz aus einem Glasmaterial aufweist.

Aufgabe der vorliegenden Erfindung ist es daher, eine Vorrichtung und ein Verfahren zur Erfassung mindestens einer Beschleunigung sowie ein entsprechendes Computerprogramm und ein entsprechendes computerlesbares Speichermedium sowie eine Verwendung einer solchen Vorrichtung aufzuzeigen, die die Beschränkungen der herkömmlichen Lösungen aufheben und es insbesondere erlauben, beliebige Bewegungen zu analysieren und dabei statische von dynamischen Beschleunigungskomponenten zu trennen.

Diese Aufgabe wird erfindungsgemäß durch die Merkmale in den Ansprüchen 1, 8, 9, 12, 14 und 15 gelöst. Zweckmäßige Ausgestaltungen der Erfindung sind in den Unteransprüchen enthalten. Vorteilhafte Ausgestaltungen sind Gegenstand der Unteransprüche.

Als vorteilhaft für die erfindungsgemäße Verwendung erweist sich der Einsatz einer speziellen Vorrichtung zur getrennten Erfassung einer statischen und einer dynamischen Beschleunigung, die im Folgenden näher beschrieben werden soll.

Erfindungsgemäß ist vorgesehen, dass zur Ermittlung der statischen und dynamischen Beschleunigungskomponenten eine Vorrichtung genutzt wird, welche mindestens eine Grundplatte und mindestens zwei Sensoren umfasst. Die Sensoren umfassen jeweils ein Masseelement und ein elastisches Abstützelement und sind über das elastische Abstützelement mit der mindestens einen Grundplatte verbunden. Die elastischen Abstützelemente sind dabei in einer Ebene (Sensorebene) auslenkbar. Die Sensoren sind so angeordnet, dass die elastischen Abstützelemente in einer gemeinsamen oder in parallelen Ebenen bei Einwirkung einer Beschleunigung ausgelenkt werden. Die Sensoren sind mit Messpunkten versehen, um die Auslenkung zu erfassen. Die Auslenkung kann dabei kapazitiv, induktiv, resistiv, opto-elektronisch erfasst oder auf irgendeine andere geeignete Art durch geeignete Sensoren erfasst werden. Erfindungsgemäß sind die Abstützelemente mindestens eines erstes und mindestens eines zweiten Masseelements so ausgeführt, dass sie bezüglich einer Beschleunigungskomponente, die in eine erste Richtung wirkt, dieselbe Reaktionscharakteristik, d. h. Kennlinie, aufweisen, aber bezüglich einer in einer senkrecht zu der ersten Richtung wirkenden Beschleunigungskomponente unterschiedliche Kennlinien aufweisen. Es versteht sich, dass die Richtungen der Beschleunigungskomponenten in der gemeinsamen Auslenkungsebene der Abstützelemente oder in dazu parallelen Ebenen wirken.

Insbesondere ist vorgesehen, dass die erste oder zweite Richtung die Richtung ist, in der eine statische Beschleunigung wie die Gravitationsbeschleunigung wirkt. Damit weisen die Abstützelemente unterschiedliche Reaktionscharakteristiken bezüglich Bewegungs- und Gravitationsbeschleunigung auf.

In einer bevorzugten Ausführungsform ist vorgesehen, dass mindestens zwei jeweils ein erstes und zweites Abstützelement mit Masseelement umfassende Paare eingesetzt werden. Vorzugsweise sind die mindestens zwei Paare spiegelsymmetrisch zueinander angeordnet. Als vorteilhaft erweist es sich, wenn die Symmetrieachse oder -gerade senkrecht auf der Grundplatte steht.

Für die räumliche Erfassung der Beschleunigungen ist in einer bevorzugten Ausführungsform vorgesehen, dass drei solcher Paare angeordnet sind, wobei die drei Sensorebenen jeweils senkrecht aufeinander stehen.

Eine andere bevorzugte Ausführungsform sieht vor, dass mindestens eine Gruppe von Abstützelementen mit Masseelementen angeordnet wird, wobei die Gruppe zwei erste und ein zweites Abstützelement mit Masseelement oder ein erstes und zwei zweite Abstützelemente mit Masseelementen umfasst. Dabei sind die doppelt vorhandenen Abstützelemente mit Masseelementen einer Gruppe spiegelsymmetrisch zueinander angeordnet.

In einer weiteren bevorzugten Ausführungsform ist vorgesehen, dass mindestens zwei Gruppen von Abstützelementen mit Masseelementen angeordnet werden, wobei die Gruppen jeweils ein erstes und ein zweites Abstützelement mit Masseelement umfassen. Zumindest ein Teil der mindestens zwei Gruppen ist so angeordnet, dass das erste und zweite Abstützelement mit Masseelement einer ersten Gruppe spiegelsymmetrisch zu dem ersten und zweiten Abstützelement mit Masseelement einer zweiten Gruppe angeordnet sind.

In einer bevorzugten Ausführungsform sind mindestens zwei Sensoren vorgesehen, die aus einer Grundplatte und einem auf dieser angeordneten elastischen Abstützung (,Abstützung' wird im Folgenden synonym zu 'Abstützelement' verwendet) bestehen, an welcher mindestens ein Masseelement befestigt ist, und an welcher zudem mindestens ein Messpunkt vorgesehen ist, über welchen die Auslenkung der Abstützung oder die dort entstehende Kraft infolge von Beschleunigungskräften auf das Masseelement, elektronisch oder mechanisch erfasst wird, und welche die gleiche Ausrichtung auf Beschleunigungskräfte in einer senkrecht zur Grundplatte stehenden Ebene aufweisen, und welche derart geformt sind, dass bei den Sensoren unterschiedliche Reaktionscharakteristiken auf Bewegungs- und Gravitationsbeschleunigung auftreten, wobei die unterschiedlichen Reaktionscharakteristiken derart ausgeprägt sind, dass bei Normierung der Sensorausgangssignale auf gleiche Reaktionen auf Beschleunigungskomponenten parallel zur Grundplatte in Richtung der Sensorausrichtung die Reaktion auf Gravitationskräfte bei den Sensoren in einem Quadranten stark unterschiedlich und in dem anderen Quadranten nur relativ gering unterschiedlich sind, so dass durch eine mathematische Verknüpfung der Sensorausgangssignale die bei den Sensoren gleichen Beschleunigungskomponenten zur Grundplatte kompensiert werden und der Verlauf der Gravitationskraft eine eindeutige Zuordnung zwischen Gravitationskraft und Ausgangssignal ermöglicht.

Durch diese Ausführungsform wird somit eine Vorrichtung zur Bestimmung eines Bewegungsvorganges mit statischen und dynamischen Beschleunigungskomponenten bereitgestellt, wobei die Vorrichtung mindestens zwei Sensoren mit Masseelementen umfasst, die auf mindestens einer Grundplatte jeweils mit einer elastischen Abstützung angeordnet sind und die in einer oder parallelen Ebenen durch Beschleunigungskräfte auslenkbar sind, wobei die Ebene oder die Ebenen mit der mindestens einen Grundplatte einen 90°-Winkel einschließen und wobei die Abstützungen für eine der Beschleunigungsformen dynamisch oder statisch gleiche und für die andere Beschleunigungsform eine unterschiedliche Reaktionscharakteristik aufweisen und die Auslenkungen der Abstützungen oder äquivalente physikalische Größen an Messpunkten erfassbar und rechentechnisch verarbeitbar sind.

Mit der beschriebenen Sensoranordnung werden einmal die Bewegungsbeschleunigungskomponenten
- in der Ausrichtungsebene der Sensoren parallel zur Grundplatte und
- senkrecht zur Grundplatte ermittelt.

Zum anderen wird die statische Beschleunigung, hervorgerufen durch die Schräglage der Grundplatte zur horizontalen Ebene in der Ausrichtungsebene der Sensoren ermittelt.

Statische Beschleunigungskomponenten im hier gebrauchten Sinne sind Gravitationsbeschleunigungen.

Horizontale und vertikale Beschleunigungen im hier gebrauchten Sinne sind Bewegungs- oder auch dynamische Beschleunigungskomponenten.

Die Ebene oder die Ebenen, in denen die Auslenkung erfolgt bzw. in denen die Masseelemente schwingen, werden als Sensorebene bezeichnet.

Quadrant ist ein Ausschnitt der Sensorebene. Insbesondere umfasst der erste Quadrant Winkelwerte von 0° bis 90°, der zweite Quadrant Winkelwerte von 90° bis 180°, der dritte Quadrant Winkelwerte von 180° bis 270°, der vierte Quadrant Winkelwerte von 270° bis 360°.

Eine erfindungsgemäße Vorrichtung zur Bestimmung eines Bewegungsvorganges mit statischen und dynamischen Beschleunigungskomponenten besteht aus mindestens zwei Sensoren mit ihren Masseelementen, die auf mindestens einer Grundplatte und jeweils mit einer elastischen Abstützung angeordnet sind.

Die Masseelemente sind dabei in einer oder parallelen Ebenen (Sensorebene) durch Beschleunigungskräfte auslenkbar, wobei die Ebene oder die Ebenen mit der mindestens einen Grundplatte einen 90°-Winkel einschließen und wobei die Abstützungen für eine der Beschleunigungsformen dynamisch oder statisch gleiche und für die andere Beschleunigungsform eine unterschiedliche Reaktionscharakteristik aufweisen und die Auslenkungen der Abstützungen oder äquivalente physikalische Größen an Messpunkten erfassbar und rechentechnisch verarbeitbar sind.

Wenn hier auf gleiche Reaktionscharakteristiken verwiesen wird, dann schließt dies auch angenäherte Reaktionscharakteristiken ein.

Die Abstützung der Masseelemente kann auf einer gemeinsamen Grundplatte vorgenommen sein oder, was insbesondere für die mikromechanische Ausführung von Bedeutung sein kann, auf verschiedenen Grundplatten. Wesentlich ist, dass die Auslenkungen der beteiligten Massekörper in einer gemeinsamen oder in parallelen Ebenen erfolgt und die Grundplatten der in den Messvorgang für diese Ebenen einbezogenen Sensoren jeweils parallel zueinander angeordnet sind.

Beim Begriff Grundplatte handelt es sich nachfolgend somit entweder um eine gemeinsame Grundplatte der Sensoren oder um parallel zueinander angeordnete Grundplatten.

Der Winkel zwischen der Horizontalen und der Grundplatte, welcher durch Lageänderung des Sensors entsteht, wird mit (α) bezeichnet. Der Winkel (α) ist, wie nachstehend noch erläutert wird, der Gravitationskraft zugeordnet, was in Kennlinien seinen Ausdruck findet.

Dieser Winkel (α) wird dabei für eine Bewegung im Koordinatensystem X-Y ermittelt. Bei einer räumlichen Bewegung im Koordinatensystem X-Y-Z ist somit mindestens eine weitere Sensoranordnung im Koordinatensystem Y-Z und/oder X-Z notwendig. Vorzugsweise werden zur Bestimmung eines Bewegungsvorganges im X-Y-Z Koordinatensystem mindestens zwei Sensorblöcke eingesetzt, wobei deren Sensorebenen unter einem Winkel zueinander, vorzugsweise von 90°, stehen.

Gemessene äquivalente physikalische Größen zur Auslenkung, die z. B. kapazitiv, optisch, opto-elektronisch oder induktiv messbar ist, können auch direkt gemessene Kräfte (z. B. piezoelektrisch erfasste Kräfte) oder Verformungen sein.

Von Vorteil für das Messverfahren ist es, wenn der untere Teil der Abstützungen der Sensoren gegenüber der Grundplatte in einem Winkel (β) vorgenommen ist, wobei der Winkel (β) ungleich 90° sein sollte, vorzugsweise sollte β < 90° gelten. Durch diese Neigung gegenüber der Grundplatte wird erreicht, dass die Differenzen der Kennlinienverläufe der Sensoren in einem Quadranten stark unterschiedlich und in dem anderen Quadranten nur geringfügig unterschiedlich sind. Die Auflösung der Winkelinformation (α) wird dadurch deutlich verbessert.

Für Messungen in einem Quadranten und bei vernachlässigbarer in die zweite Richtung wirkenden Komponente der Beschleunigung, d. h. bei vernachlässigbarer Vertikalbeschleunigung, sind zwei Sensoren, deren Abstützungen für eine der Beschleunigungsformen (dynamisch oder statisch) gleiche und für die andere Beschleunigungsform eine unterschiedliche Reaktionscharakteristik aufweisen, auf der Grundplatte angeordnet.

Für allgemeine Beschleunigungsmessungen in zwei Quadranten sind in einer oder parallelen Ebenen (Sensorebenen) vier Abstützelemente mit Masseelementen (d. h. vier Sensoren) jeweils auf der mindestens einen Grundplatte angeordnet, wobei jeweils zwei Sensoren ein Paar bilden, deren Abstützungen für eine der Beschleunigungsformen (dynamisch oder statisch) gleiche und für die andere Beschleunigungsform eine unterschiedliche Reaktionscharakteristik aufweisen.

Die Paare werden bevorzugt zueinander spiegelsymmetrisch bezogen auf die Grundplatte angeordnet.

In einer vorteilhaften Weiterentwicklung ist auch vorgesehen, dass anstelle von vier Sensoren mit Masseelementen drei Sensoren Anwendung finden. Ein Sensor übernimmt bei dieser Ausführung eine Doppelfunktion, indem er mit dem jeweils anderen Sensor ein Paar für die messtechnische Auswertung bildet.

Die Sensoren für die Messung in einem und/oder mehr Quadranten werden bevorzugt in Sensorblöcken angeordnet.

Die messtechnische Verarbeitung der gemessenen Größen zur Bestimmung der Beschleunigungskomponenten beruht auf einer Eliminierung von Beschleunigungsanteilen durch mathematische Verarbeitung der zeitgleich gemessenen Auslenkungen der Sensoren, nachfolgend mathematische Eliminierung genannt. Dies kann im einfachsten Fall durch Differenzbildung erfolgen, ist aber nicht darauf beschränkt.

Weisen die Sensoren z. B. Abweichungen im Winkel (β), in den Massengrößen etc. auf, kann es notwendig sein, gemessene Werte zu verstärken oder anderweitig zu bearbeiten, damit bei der jeweiligen Differenzbildung die für die Eliminierung vorgesehene Beschleunigungskomponente auch tatsächlich eliminiert wird.

Um das erfindungsgemäße Verfahren auszuführen, wird eine erfindungsgemäße Vorrichtung verwendet, d. h. eine Vorrichtung zur Erfassung mindestens einer Beschleunigung, umfassend mindestens eine Grundplatte und mindestens zwei Masseelemente, wobei jedes Masseelement über ein elastisches Abstützelement mit der mindestens einen Grundplatte verbunden ist, und wobei die Abstützelemente in einer gemeinsamen Ebene oder in parallelen Ebenen auslenkbar sind und die mindestens zwei Masse- und/oder Abstützelemente jeweils zumindest einen Messpunkt aufweisen, und wobei die Abstützelemente mindestens eines ersten und mindestens eines zweiten Masseelements derart ausgelegt sind, dass das Abstützelement des mindestens einen ersten Masseelements und das Abstützelement des mindestens einen zweiten Masseelements in den Messpunkten bezüglich einer ersten, in einer ersten Richtung wirkenden Komponente einer in der gemeinsamen Ebene oder in den parallelen Ebenen wirkenden Beschleunigung dieselbe Reaktionscharakteristik und in einer senkrecht zu der ersten Komponente wirkenden zweiten Komponente der Beschleunigung voneinander verschiedene Reaktionscharakteristiken aufweisen. Zur Ermittlung der Beschleunigung, insbesondere einer dynamischen und einer statischen Beschleunigung, ist dabei erfindungsgemäß vorgesehen, die Auslenkung mindestens eines ersten und mindestens eines zweiten Masse- und/oder Abstützelements zu erfassen. Dies erfolgt insbesondere dadurch, dass Daten, wie z. B. kapazitive, induktive, resistive, opto-elektronische Werte o. dgl., erfasst werden, die die Auslenkung beschreiben. Die Auslenkung wird dabei insbesondere für mindestens einen der Messpunkte erfasst. Erfindungsgemäß werden die die Auslenkung beschreibenden Daten der mindestens einen ersten und mindestens einen zweiten Masse- und/oder Abstützelemente ausgewertet, um die in die erste Richtung wirkende Komponente zu eliminieren. Dies ist möglich, da die Abstützelemente so ausgelegt sind, dass sie bezüglich der in die erste Richtung wirkenden Komponente der Beschleunigung dieselbe Reaktionscharakteristik zeigen. Im Fall, dass die in die zweite Richtung wirkende Komponente vernachlässigbar ist, wird das Ergebnis der Auswertung, d. h. das um die in die erste Richtung wirkende Komponente bereinigte Ergebnis genutzt, um die in die erste Richtung wirkende Komponente der Beschleunigung zurückzugewinnen. Das um die in die erste Richtung wirkende Komponente bereinigte Ergebnis wird als statische Beschleunigung und die in die erste Richtung wirkende Komponente wird als dynamische Beschleunigung erfasst.

Erfindungsgemäß ist vorgesehen, die Daten zeitgleich zu erfassen. Vorzugsweise erfolgt die Auswertung online.

Im allgemeinen Fall, d. h. wenn die in die zweite Richtung wirkende Komponente nicht vernachlässigbar ist, wird die vorerwähnte Vorrichtung genutzt, die um mindestens ein erstes Abstützelement mit Messeelement ergänzt ist und somit mindestens drei Abstützelemente mit Messeelement aufweist. Es ist dabei vorgesehen, dass die Abstützelemente mindestens zweier erster und mindestens eines zweiten Masseelements derart ausgelegt sind, dass die Abstützelemente der mindestens zwei ersten Masseelemente und das Abstützelement des mindestens einen zweiten Masseelements in den Messpunkten bezüglich einer ersten, in einer ersten Richtung wirkenden Komponente einer in der gemeinsamen Ebene oder in den parallelen Ebenen wirkenden Beschleunigung dieselbe Reaktionscharakteristik und in einer senkrecht zu der ersten Komponente wirkenden zweiten Komponente der Beschleunigung voneinander verschiedene Reaktionscharakteristiken aufweisen. Es werden dann jeweils Daten erfasst, die die Auslenkung der mindestens drei Abstützelemente beschreiben, und es erfolgt eine erste Auswertung der zu einem ersten der ersten Abstützelemente und zu dem zweiten Abstützelement gehörigen Daten sowie eine zweite Auswertung der zu einem zweiten der ersten Abstützelemente und zu dem zweiten Abstützelement gehörigen Daten. Durch die erste und zweite Auswertung werden jeweils die in der ersten Richtung wirkende Komponente der Beschleunigung eliminiert. Anschließend werden die um die in der ersten Richtung wirkende Komponente bereinigten Ergebnisse der ersten und zweiten Auswertung wiederum ausgewertet, um die in der zweiten Richtung wirkende Komponente der Beschleunigung zu eliminieren. Anschließend wird das um die in der ersten und zweiten Richtung wirkende Komponente bereinigte Ergebnis verwendet, um die in der ersten und zweiten Richtung wirkende Komponente der Beschleunigung zurückzugewinnen. Das um die in die erste und zweite Richtung wirkenden Komponenten bereinigte Ergebnis wird als statische Beschleunigung und die in die erste und zweite Richtung wirkenden Komponenten wird als dynamische Beschleunigung erfasst.

In einer weiteren Ausführungsform ist vorgesehen, auch mindestens zwei zweite Abstützelemente mit Masselement zu verwenden, wobei zumindest ein Teil der mindestens zwei zweiten Abstützelemente mit Masselement spiegelsymmetrisch zueinander angeordnet sind.

In einer bevorzugten Ausführungsform des Verfahrens ist vorgesehen, dass zur Bestimmung eines Bewegungsvorganges mit statischen und dynamischen Beschleunigungskomponenten mindestens zwei Sensoren mit Masseelement vorgesehen sind, die auf mindestens einer Grundplatte jeweils mit einer elastischen Abstützung angeordnet sind und die in einer oder parallelen jeweils senkrecht zur Grundplatte befindlichen Ebenen durch Beschleunigungskräfte auslenkbar sind, wobei die Abstützungen für eine der Beschleunigungsformen dynamisch oder statisch gleiche und für die andere Beschleunigungsform eine unterschiedliche Reaktionscharakteristik aufweisen, und wobei die Auslenkungen der Abstützungen oder äquivalente physikalische Größen an Messpunkten zeitgleich erfasst werden und eine mathematische Eliminierung der in diesen Messwerten enthaltenen Beschleunigungskomponenten erfolgt, derart, dass zunächst durch paarweise mathematische Verknüpfung von zwei Sensoren die Beschleunigungskräfte in Längsrichtung eliminiert werden und anschließend durch mathematische Verknüpfung der aus diesen Beschleunigungspaaren gewonnenen Werte die Vertikalbeschleunigung eliminiert wird, so dass als isolierte Größe die Gravitationsbeschleunigung verbleibt, in deren Kenntnis die Vertikalbeschleunigung und anschließend die Längsbeschleunigung rückermittelt werden.

In einem weiteren bevorzugten Verfahren zur Bestimmung eines Bewegungsvorganges mit statischen und dynamischen Beschleunigungskomponenten sind vier Sensoren mit Masseelementen vorgesehen, die auf mindestens einer Grundplatte jeweils mit einer elastischen Abstützung angeordnet sind und die in einer oder parallelen jeweils senkrecht zur Grundplatte befindlich Ebenen durch Beschleunigungskräfte auslenkbar sind, wobei die Abstützungen für eine der Beschleunigungsformen dynamisch oder statisch gleiche und für die andere Beschleunigungsform eine unterschiedliche Reaktionscharakteristik aufweisen, wobei jeweils zwei Abstützungen gleich, aber spiegelsymmetrisch angeordnet sind und die Auslenkungen der Abstützungen oder äquivalente physikalische Größen an Messpunkten erfassbar und rechentechnisch verarbeitbar sind, mit folgenden Verfahrensschritten:
- die Auslenkung oder eine andere physikalische Größe mindestens eines Messpunktes der jeweiligen Sensoren wird unter Beschleunigungsbedingungen zeitgleich gemessen und die Messwerte werden einer mathematischen Eliminierung von Beschleunigungskomponenten unterzogen, die mindestens umfasst
- die dynamische Beschleunigungskomponente, die parallel zur Grundplatte gerichtet ist, wird eliminiert, indem eine mathematische Verknüpfung der gemessenen Auslenkungswerte oder der äquivalenten physikalische Größen der Sensoren als einem Paar und der spiegelgleich angeordneten Sensoren als weiteres Paar erfolgt,
- die vertikal zur Grundplatte wirkende Beschleunigungskomponente wird eliminiert durch eine mathematische Verknüpfung zwischen den um die dynamische parallel zur Grundplatte gerichtete Beschleunigungskomponente bereinigten Werten der Sensorpaare,
und der so ermittelte Winkel (α) der Grundplatte gegenüber der Horizontalen wird zur Bestimmung der parallelen Beschleunigung (PB) zur Grundplatte und der vertikalen Beschleunigung (VB) zur Grundplatte genutzt.

Ein anderes bevorzugtes Verfahren zur Bestimmung eines Bewegungsvorganges mit statischen und dynamischen Beschleunigungskomponenten sieht zwei Sensoren mit Masseelementen vor, die auf einer Grundplatte jeweils mit einer elastischen Abstützung angeordnet sind und die in einer oder parallelen jeweils senkrecht zur Grundplatte befindlichen Ebenen durch Beschleunigungskräfte auslenkbar sind, wobei die Abstützungen für eine der Beschleunigungsformen dynamisch oder statisch gleiche und für die andere Beschleunigungsform eine unterschiedliche Reaktionscharakteristik aufweisen, mit folgenden Verfahrensschritten:
- die Auslenkung oder eine andere physikalische Größe mindestens eines Messpunktes der Sensoren wird unter Beschleunigungsbedingungen, bei denen die Vertikalbeschleunigung vernachlässigbar ist, zeitgleich gemessen und die Messwerte werden einer mathematischen Eliminierung von Beschleunigungskomponenten unterzogen, die mindestens umfasst
- die dynamische Beschleunigungskomponente, die parallel zur Grundplatte gerichtet ist, wird kompensiert, indem eine mathematische Verknüpfung der gemessenen Auslenkungswerte oder der äquivalenten physikalischen Größen der Sensoren erfolgt,
- und der so ermittelte Winkel (α) der Grundplatte gegenüber der Horizontalen wird zur Bestimmung der parallelen Beschleunigung (PB) zur Grundplatte genutzt.

Ein weiteres bevorzugtes Verfahren zur Bestimmung eines allgemeinen Bewegungsvorganges mit statischen und dynamischen Beschleunigungskomponenten mit mindestens drei Sensoren (bei vernachlässigbarer vertikaler Beschleunigung auch mit mindestens zwei Sensoren) jeweils mit Masseelementen, die auf mindestens einer Grundplatte jeweils mit einer elastischen Abstützung angeordnet sind und die in einer oder parallelen jeweils senkrecht zur Grundplatte befindlichen Ebenen durch Beschleunigungskräfte auslenkbar sind, wobei die Abstützungen für eine der Beschleunigungsformen dynamisch oder statisch gleiche und für die andere Beschleunigungsform eine unterschiedliche Reaktionscharakteristik aufweisen, sieht vor, dass die Auslenkungen der Abstützungen oder äquivalente physikalische Größen an Messpunkten zeitgleich erfasst werden und eine mathematische Eliminierung der in diesen Messwerten enthaltenen Beschleunigungskomponenten erfolgt, derart, dass zunächst durch paarweise Verknüpfung von zwei Sensoren die Beschleunigungskräfte in Längsrichtung eliminiert werden und anschließend durch Verknüpfung der aus diesen Beschleunigungspaaren gewonnenen Werte die Vertikalbeschleunigung eliminiert wird, so dass als isolierte Größe die Gravitationsbeschleunigung verbleibt, in deren Kenntnis die Vertikalbeschleunigung und anschließend die Längsbeschleunigung rückermittelt werden.

Bei vernachlässigbarer Vertikalbeschleunigung entfällt die zweite Eliminierung.

Die Rückermittlung der Vertikal- und der Längsbeschleunigung muss für alle Sensoren zum gleichen Ergebnis für die parallele und die senkrecht zur Grundplatte gerichteten Beschleunigungen führen. Sollte dies nicht der Fall sein, kann durch Testalgorithmen eine iterative Annäherung erfolgen (Selbstkalibrierung). Mit anderen Worten, das System besitzt einen Selbstkontrollmechanismus hinsichtlich der korrekten Anordnung der Sensoren und deren Reaktionsnormierung auf eine Beschleunigungsart, vorzugsweise die Längsbeschleunigung.

Eine solche Vorrichtung, die zur getrennten Erfassung einer statischen und einer dynamischen Beschleunigung geeignet ist, lässt sich erfindungsgemäß verwenden, um mindestens einen Lageparameter zumindest von Teilen der Vorrichtung im Raum zu ermitteln. Bei diesen Lageparametern kann es sich um Orts- und/oder Orientierungswerte in der Fläche oder im Raum handeln.

Eine bevorzugte Ausführungsform der Erfindung sieht vor, dass zur Ermittlung des mindestens einen Lageparameters statische und dynamische Beschleunigung getrennt und insbesondere die Gravitations- und Bewegungsbeschleunigung über sämtliche Quadranten isoliert werden.

In einer bevorzugten Ausführungsform der erfindungsgemäßen Verwendung umfasst die Lageermittlung eine Ermittlung einer Komponente der Beschleunigung, die durch die Gravitation hervorgerufen wird. Die Gravitationsbeschleunigung wird somit aus der von der Vorrichtung erfassten Gesamtbeschleunigung separiert. Das erweist sich insbesondere als vorteilhaft, weil so eine Bewegung der Vorrichtung bezüglich eines Bezugskoordinatensystems, insbesondere bezüglich der Horizontalen oder Vertikalen, erfasst werden kann.

In einer bevorzugten Ausführungsform umfasst die Verwendung eine Steuerung von Prozessen. Dies erweist sich insbesondere als vorteilhaft bei der Steuerung von computergestützten Anwendungen, wie beispielsweise von Computerspielen.

Vorzugsweise umfasst die Verwendung eine Analyse allgemeiner Bewegungen von Körpern. In Abhängigkeit vom Ergebnis der Analyse ist in einer bevorzugten Ausführungsform vorgesehen, dass der Bewegung eine bestimmte Funktion zugeordnet wird und/oder technische Mittel gesteuert werden, um durch die technischen Mittel eine gewollte Bewegung auszuführen. Vorzugsweise erfolgt die Bewegung mit Hilfe eines Regelkreises.

Besonders vorteilhaft erweist sich dabei die Verwendung der Vorrichtung zur Erfassung und Analyse von Bewegungen im Sportbereich. Dabei kann die Vorrichtung in einem Sportgerät und/oder in Sportkleidung integriert sein. Eine weitere vorteilhafte Verwendung besteht in der Analyse von Bewegungen zu Trainingszwecken.

Eine weitere vorteilhafte Verwendung der Vorrichtung liegt im Bereich der Personenüberwachung. Bei dieser speziellen Verwendung können Tagesprofile einer Person über deren Grundzustände, wie beispielsweise Tätigkeiten, Ruhe-/Aktivitätsphasen, einem Grundzustand untergelagerte Bewegungen o. dgl., erstellt werden.

Eine bevorzugte Verwendung besteht darin, Positionsänderungen eines Objektes zu erfassen, worunter Änderungen der Lage und/oder der Orientierung des Objekts verstanden werden. Das erweist sich insbesondere als vorteilhaft bei der Erfassung von Bewegungen von transportierten Objekten relativ zur Bewegung des Transportmittels. Insbesondere kann das Verrutschen oder die Schrägstellung eines transportierten Objektes bezüglich des Transportmittels detektiert werden.

Eine andere bevorzugte Verwendung sieht die Erfassung einer Neigung eines Objektes vor. Dies erweist sich insbesondere bei der Überwachung von Objekten, die dynamisch gelagert sind, als vorteilhaft. Bei solchen dynamisch gelagerten Objekten kann es sich beispielsweise um boden-, luft- oder wassergebundene Fahrzeuge handeln, wobei deren Bewegung durch Luft- oder Wasserbewegungen überlagert werden, so dass neben einer Bewegungsbeschleunigung auch eine Schräglagenänderung auftritt.

Eine weitere bevorzugte Verwendung sieht vor, dass die Lage (Position und/oder Orientierung) eines Objektes stabilisiert wird. Dies erweist sich insbesondere zur Stabilisierung von Fluggeräten als vorteilhaft.

In einer anderen bevorzugten Verwendung ist vorgesehen, dass die Schreibbewegung analysiert wird.

Generell besteht eine Verwendung der Vorrichtung auch darin, die separierten statischen und dynamischen Beschleunigungskomponenten von Bewegungen aufzuzeichnen und/oder zu dokumentieren sowie Bewegungen zu rekonstruieren. Insbesondere erweist sich eine Rekonstruktion der allein mit der statischen Beschleunigungskomponente bzw. der allein mit der dynamischen Beschleunigungskomponente verbundenen Bewegung als vorteilhaft.

Ein Computerprogramm gemäß einem ersten Aspekt der Erfindung ermöglicht es einer Datenverarbeitungseinrichtung, nachdem es in Speichermittel der Datenverarbeitungseinrichtung geladen worden ist, ein Verfahren zur Erfassung mindestens einer Beschleunigung durchzuführen, wobei eine Vorrichtung verwendet wird, welche mindestens eine Grundplatte und mindestens zwei Masseelemente umfasst, und wobei jedes Masseelement über ein elastisches Abstützelement mit der mindestens einen Grundplatte verbunden ist, die Abstützelemente in einer gemeinsamen Ebene oder in parallelen Ebenen auslenkbar sind und die mindestens zwei Masse- und/oder Abstützelemente jeweils zumindest einen Messpunkt aufweisen, und wobei die Abstützelemente mindestens eines ersten und mindestens eines zweiten Masseelements derart ausgelegt sind, dass das Abstützelement des mindestens einen ersten Masseelements und das Abstützelement des mindestens einen zweiten Masseelements in den Messpunkten bezüglich einer ersten, in einer ersten Richtung wirkenden Komponente einer in der gemeinsamen Ebene oder in den parallelen Ebenen wirkenden Beschleunigung dieselbe Reaktionscharakteristik und in einer senkrecht zu der ersten Komponente wirkenden zweiten Komponente der Beschleunigung voneinander verschiedene Reaktionscharakteristiken aufweisen, und wobei die Auslenkung der Messpunkte beschreibende Daten zumindest eines ersten und zumindest eines zweiten Masse- und/oder Abstützelements erfasst, durch Auswertung der erfassten Daten die in der ersten Richtung wirkende Komponente der Beschleunigung eliminiert und bei vernachlässigbarer in die zweite Richtung wirkenden Komponente das um die in die erste Richtung wirkende Komponente bereinigte Ergebnis zur Rückermittlung der in die erste Richtung wirkenden Komponente genutzt wird und das um die in die erste Richtung wirkende Komponente bereinigte Ergebnis als statische Beschleunigung und die in die erste Richtung wirkende Komponente als dynamische Beschleunigung erfasst wird.

Ein Computerprogramm gemäß einem zweiten Aspekt der Erfindung ermöglicht es einer Datenverarbeitungseinrichtung, nachdem es in Speichermittel der Datenverarbeitungseinrichtung geladen worden ist, ein Verfahren zur Erfassung mindestens einer Beschleunigung durchzuführen, wobei eine Vorrichtung verwendet wird, welche mindestens eine Grundplatte und mindestens drei Masseelemente umfasst, und wobei jedes Masseelement über ein elastisches Abstützelement mit der mindestens einen Grundplatte verbunden ist, die Abstützelemente in einer gemeinsamen Ebene oder in parallelen Ebenen auslenkbar sind und die mindestens drei Masse- und/oder Abstützelemente jeweils zumindest einen Messpunkt aufweisen, und wobei die Abstützelemente mindestens zweier erster und mindestens eines zweiten Masseelements derart ausgelegt sind, dass die Abstützelemente der mindestens zwei ersten Masseelemente und das Abstützelement des mindestens einen zweiten Masseelements in den Messpunkten bezüglich einer ersten, in einer ersten Richtung wirkenden Komponente einer in der gemeinsamen Ebene oder in den parallelen Ebenen wirkenden Beschleunigung dieselbe Reaktionscharakteristik und in einer senkrecht zu der ersten Komponente wirkenden zweiten Komponente der Beschleunigung voneinander verschiedene Reaktionscharakteristiken aufweisen, und wobei die Auslenkung der Messpunkte beschreibende Daten zumindest von zwei ersten und zumindest eines zweiten Masse- und/oder Abstützelements erfasst, durch Auswertung der von dem Masseelement eines ersten der mindestens zwei ersten und des zweiten Masse- und/oder Abstützelements erfassten Daten und durch Auswertung der von dem Masseelement eines zweiten der mindestens zwei ersten und des zweiten Masse- und/oder Abstützelements erfassten Daten jeweils die in der ersten Richtung wirkende Komponente der Beschleunigung eliminiert und durch Auswertung der beiden um die in die erste Richtung wirkende Komponente bereinigten Ergebnisse die in die zweite Richtung wirkende Komponente eliminiert und das um die in die zweite Richtung wirkende Komponente bereinigte Ergebnis zur Rückermittlung der in die erste und zweite Richtung wirkenden Komponenten genutzt wird und das um die in die erste und zweite Richtung wirkenden Komponenten bereinigte Ergebnis als statische Beschleunigung und die in die erste und zweite Richtung wirkenden Komponenten als dynamische Beschleunigung erfasst werden.

Ein Computerprogramm gemäß einem dritten Aspekt der Erfindung konfiguriert eine zur getrennten Erfassung einer statischen und einer dynamischen Beschleunigung geeigneten Vorrichtung, nachdem das Computerprogramm in Speichermittel der Vorrichtung geladen worden ist, so, dass die Vorrichtung für eine Verwendung nutzbar ist, wobei eine Analyse von Bewegungen erfolgt, wobei mindestens ein Lageparameter zumindest von Teilen der Vorrichtung im Raum ermittelt wird.

In einer weiteren bevorzugten Ausführungsform der Erfindung ist vorgesehen, dass das erfindungsgemäße Computerprogramm modular aufgebaut ist, wobei einzelne Module auf verschiedenen Teilen der Datenverarbeitungseinrichtung installiert sind.

Vorteilhafte Ausführungsformen sehen zusätzlich Computerprogramme vor, durch welche weitere in der Beschreibung angegebene Verfahrensschritte oder Verfahrensabläufe ausgeführt werden können.

Solche Computerprogramme können beispielsweise (gegen Gebühr oder unentgeltlich, frei zugänglich oder passwortgeschützt) downloadbar in einem Daten- oder Kommunikationsnetz bereitgestellt werden. Die so bereitgestellten Computerprogramme können dann durch ein Verfahren nutzbar gemacht werden, bei dem ein Computerprogramm nach Anspruch 14 aus einem elektronischen Datennetz, wie beispielsweise aus dem Internet, auf eine an das Datennetz angeschlossene Datenverarbeitungseinrichtung heruntergeladen wird.

Um das erfindungsgemäße Verfahren durchzuführen, ist vorgesehen, ein computerlesbares Speichermedium einzusetzen, auf dem ein Programm gespeichert ist, das es einer Datenverarbeitungseinrichtung ermöglicht, nachdem es in Speichermittel der Datenverarbeitungseinrichtung geladen worden ist, ein Verfahren zur Erfassung mindestens einer Beschleunigung durchzuführen, wobei eine Vorrichtung verwendet wird, welche mindestens eine Grundplatte und mindestens zwei Masseelemente umfasst, und wobei jedes Masseelement über ein elastisches Abstützelement mit der mindestens einen Grundplatte verbunden ist, die Abstützelemente in einer gemeinsamen Ebene oder in parallelen Ebenen auslenkbar sind und die mindestens zwei Masse- und/oder Abstützelemente jeweils zumindest einen Messpunkt aufweisen, und wobei die Abstützelemente mindestens eines ersten und mindestens eines zweiten Masseelements derart ausgelegt sind, dass das Abstützelement des mindestens einen ersten Masseelements und das Abstützelement des mindestens einen zweiten Masseelements in den Messpunkten bezüglich einer ersten, in einer ersten Richtung wirkenden Komponente einer in der gemeinsamen Ebene oder in den parallelen Ebenen wirkenden Beschleunigung dieselbe Reaktionscharakteristik und in einer senkrecht zu der ersten Komponente wirkenden zweiten Komponente der Beschleunigung voneinander verschiedene Reaktionscharakteristiken aufweisen, und wobei die Auslenkung der Messpunkte beschreibende Daten zumindest eines ersten und zumindest eines zweiten Masse- und/oder Abstützelements erfasst, durch Auswertung der erfassten Daten die in der ersten Richtung wirkende Komponente der Beschleunigung eliminiert und bei vernachlässigbarer in die zweite Richtung wirkenden Komponente das um die in die erste Richtung wirkende Komponente bereinigte Ergebnis zur Rückermittlung der in die erste Richtung wirkenden Komponente genutzt wird und das um die in die erste Richtung wirkende Komponente bereinigte Ergebnis als statische Beschleunigung und die in die erste Richtung wirkende Komponente als dynamische Beschleunigung erfasst wird.

Zur Ausführung einer alternativen Variante des erfindungsgemäßen Verfahrens ist vorgesehen, ein computerlesbares Speichermedium einzusetzen, auf dem ein Programm gespeichert ist, das es einer Datenverarbeitungseinrichtung ermöglicht, nachdem es in Speichermittel der Datenverarbeitungseinrichtung geladen worden ist, ein Verfahren zur Erfassung mindestens einer Beschleunigung durchzuführen, wobei eine Vorrichtung verwendet wird, welche mindestens eine Grundplatte und mindestens drei Masseelemente umfasst, und wobei jedes Masseelement über ein elastisches Abstützelement mit der mindestens einen Grundplatte verbunden ist, die Abstützelemente in einer gemeinsamen Ebene oder in parallelen Ebenen auslenkbar sind und die mindestens drei Masse- und/oder Abstützelemente jeweils zumindest einen Messpunkt aufweisen, und wobei die Abstützelemente mindestens zweier erster und mindestens eines zweiten Masseelements derart ausgelegt sind, dass die Abstützelemente der mindestens zwei ersten Masseelemente und das Abstützelement des mindestens einen zweiten Masseelements in den Messpunkten bezüglich einer ersten, in einer ersten Richtung wirkenden Komponente einer in der gemeinsamen Ebene oder in den parallelen Ebenen wirkenden Beschleunigung dieselbe Reaktionscharakteristik und in einer senkrecht zu der ersten Komponente wirkenden zweiten Komponente der Beschleunigung voneinander verschiedene Reaktionscharakteristiken aufweisen, und wobei die Auslenkung der Messpunkte beschreibende Daten zumindest von zwei ersten und zumindest eines zweiten Masse- und/oder Abstützelements erfasst, durch Auswertung der von dem Masseelement eines ersten der mindestens zwei ersten und des zweiten Masse- und/oder Abstützelements erfassten Daten und durch Auswertung der von dem Masseelement eines zweiten der mindestens zwei ersten und des zweiten Masse- und/oder Abstützelements erfassten Daten jeweils die in der ersten Richtung wirkende Komponente der Beschleunigung eliminiert und durch Auswertung der beiden um die in die erste Richtung wirkende Komponente bereinigten Ergebnisse die in die zweite Richtung wirkende Komponente eliminiert und das um die in die zweite Richtung wirkende Komponente bereinigte Ergebnis zur Rückermittlung der in die erste und zweite Richtung wirkenden Komponenten genutzt wird und das um die in die erste und zweite Richtung wirkenden Komponenten bereinigte Ergebnis als statische Beschleunigung und die in die erste und zweite Richtung wirkenden Komponenten als dynamische Beschleunigung erfasst werden.

Um die erfindungsgemäße Verwendung zu ermöglichen, ist vorgesehen, ein computerlesbares Speichermedium einzusetzen, auf dem ein Programm gespeichert ist, das eine zur getrennten Erfassung einer statischen und einer dynamischen Beschleunigung geeigneten Vorrichtung, nachdem das Computerprogramm in Speichermittel der Vorrichtung geladen worden ist, so konfiguriert, dass die Vorrichtung für eine Verwendung nutzbar ist, wobei eine Analyse von Bewegungen erfolgt, wobei mindestens ein Lageparameter zumindest von Teilen der Vorrichtung im Raum ermittelt wird.

Erfindungsgemäße Verwendungen werden nachfolgend anhand verschiedener beispielhafter Ausführungen in größerem Detail beschrieben. Den Ausführungsbeispielen für die erfindungsgemäße Verwendung wird eine Beschreibung einer beispielhaften Vorrichtung für eine getrennte Erfassung einer statischen und einer dynamischen Beschleunigung und ein entsprechendes Auswerteverfahren vorangestellt.

Es zeigen:
- Figur 1: einen Sensorblock aus vier Sensoren in einer Sensorebene,
- Figur 2: die Kennlinien für Beschleunigungen,
- Figur 3: die mathematische Eliminierung von Beschleunigungskomponenten bei vier Sensoren,
- Figur 4: einen Sensorblock aus drei Sensoren,
- Figur 5: die Kennlinien für die Beschleunigungen,
- Figur 6: die mathematische Eliminierung von Beschleunigungskomponenten bei drei Sensoren und
- Figur 7: eine Ausführung in Silizium.

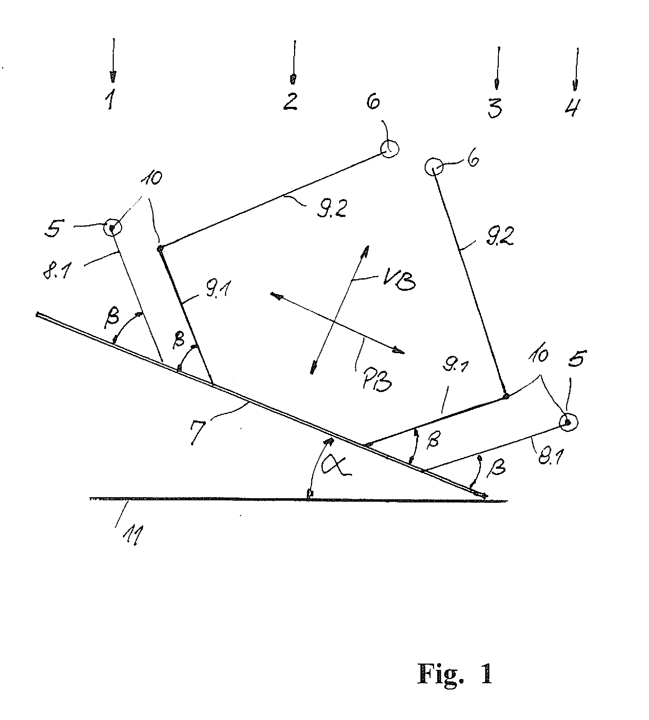

Fig. 1 zeigt die Vorrichtung zur Bestimmung eines Bewegungsvorganges mit statischen und dynamischen Beschleunigungskomponenten auf hier einer zur Horizontalen 11 um den Winkel (α) geneigten Grundplatte 7 in einer mechanischen Ausführung mit vier Sensoren 1 - 4.

Die mittels des Sensorblocks mit den Sensoren 1 - 4 ermittelbaren Beschleunigungsgrößen sind
- der Winkel (α) als Neigung des Sensorblocks, oder genauer, der Grundplatte 7 gegenüber der Horizontalen 11,
- die parallele Beschleunigung (PB) zur Grundplatte 7, auch als Längsbeschleunigung zu bezeichnen und
- die vertikale Beschleunigung (VB) zur Grundplatte 7.

Jeder der vier Sensoren 1 - 4 weist ein Masseelement 5 oder 6 auf, die auf der Grundplatte 7 jeweils mit einer elastischen Abstützung 8, 9 angeordnet sind und die in einer senkrecht zur Grundplatte 7 befindlichen Ebene, der Sensorebene, durch Beschleunigungskräfte auslenkbar sind. Jeweils zwei Abstützungen sind gleich aber spiegelsymmetrisch angeordnet.

Eine Schlüsselstellung für die universelle Funktionsweise der vorgeschlagenen Vorrichtung kommt den Abstützungen 8, 9 der Masseelemente 5, 6 zu. Diese Abstützungen 8, 9 der jeweils ein Paar bildenden Sensoren 1, 2 und 3, 4 müssen der Bedingung genügen, für eine der Beschleunigungsformen dynamisch oder statisch gleiche und für die andere Beschleunigungsform eine unterschiedliche Reaktionscharakteristik aufzuweisen.

Die dargestellten Ausführungen der Sensorpaare 1, 2 und 3, 4 erfüllen diese Bedingung, indem die Abstützung 8 ein Stab 8.1 oder ein Streifen 8.1 ist, wobei bei einem Streifen 8.1 dieser in der Streifenebene elastisch verformbar ist. Die Abstützung 9 wird durch einen abgewinkelten oder gebogenen Stab oder Streifen gebildet mit den Abschnitten 9.1, 9.2.

Da das Auswerteverfahren auf einer mathematischen Eliminierung von Beschleunigungskomponenten z. B. durch eine Differenzbildung zwischen den zeitgleich gemessenen Messwerten für die Auslenkung oder einer anderen äquivalenten physikalischen Größe der Messpunkte 10 infolge der Wirkung von Beschleunigung beruht, ist es zweckmäßig, wo möglich, bauliche Übereinstimmung und optimierte Ausbildungen vorzusehen.

In diesem Sinne ist in vorteilhaften Ausführungen vorgesehen, dass der Abschnitt 9.1 des Stabes oder Streifens der Abstützung 9 im Anfangsbereich von der Grundplatte 7 aus gesehen in der Form und der Verformbarkeit jeweils dem Stab oder Streifen 8.1 entspricht.

Dazu gehört auch, dass der abgewinkelte Abschnitt 9.2 zum Abschnitt 9.1 einen Winkel von 90° einschließt. Ferner ist es vorteilhaft, wenn die beiden Abschnitte 9.1, 9.2 eine unterschiedliche Länge aufweisen, vorzugsweise der Abschnitt 9.2 länger als der Abschnitt 9.1 ist.

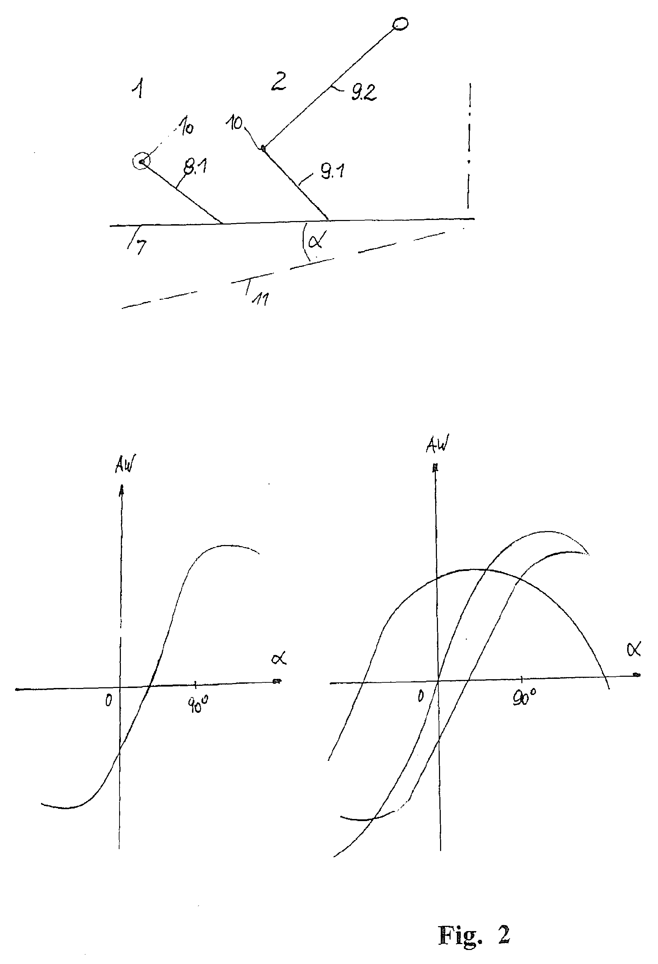

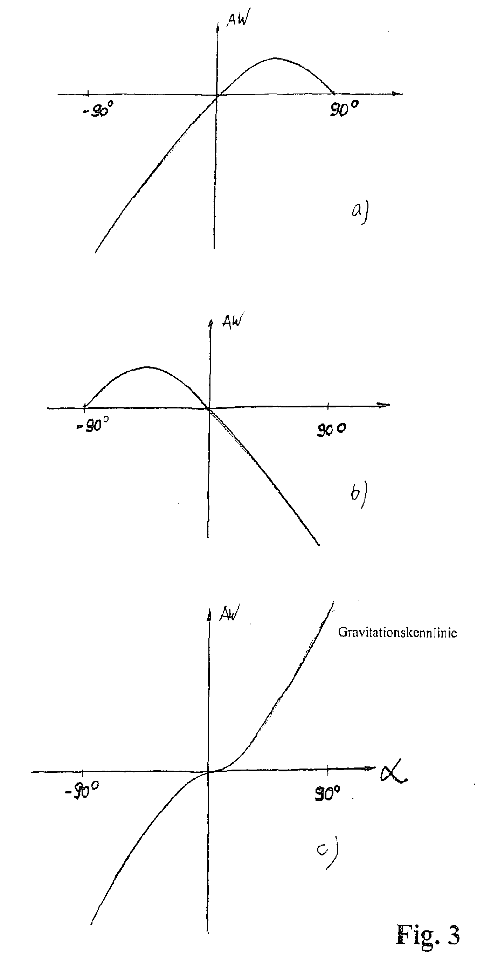

Das erfindungsgemäße Verfahren soll anhand von Fig. 2 und Fig. 3 grundsätzlich erläutert werden.

Fig. 2 zeigt einen halben Sensorblock mit den Kennlinien der Reaktionscharakteristiken der Sensoren 1 und 2, wobei die Kennlinien der Sensoren 3 und 4 spiegelgleich ausfallen, so dass auf eine gesonderte Darstellung verzichtet wurde.

Oben sind die Sensoren 1 und 2 dargestellt und darunter die jeweiligen Gravitationsbeschleunigungskennlinien in Bezug auf das Ausgangssignal (AW), das am Messpunkt 10 gemessen wird und im Folgenden durch mathematische Eliminierung von Beschleunigungskomponenten bearbeitet wird.

Die Abstützungen 8, 9 der jeweils ein Paar bildenden Sensoren 1, 2 und 3, 4 müssen der Bedingung genügen, für eine der Beschleunigungsformen dynamisch oder statisch gleiche und für die andere Beschleunigungsform eine unterschiedliche Reaktionscharakteristik aufzuweisen.

Dies wird bei den Sensorpaaren dadurch erreicht, dass die Abstützung 8 ein Stab 8.1 und die Abstützung 9 durch einen abgewinkelten Stab gebildet ist mit den Abschnitten 9.1, 9.2.

Die Sensoren weisen folgende Kennliniencharakteristika auf:

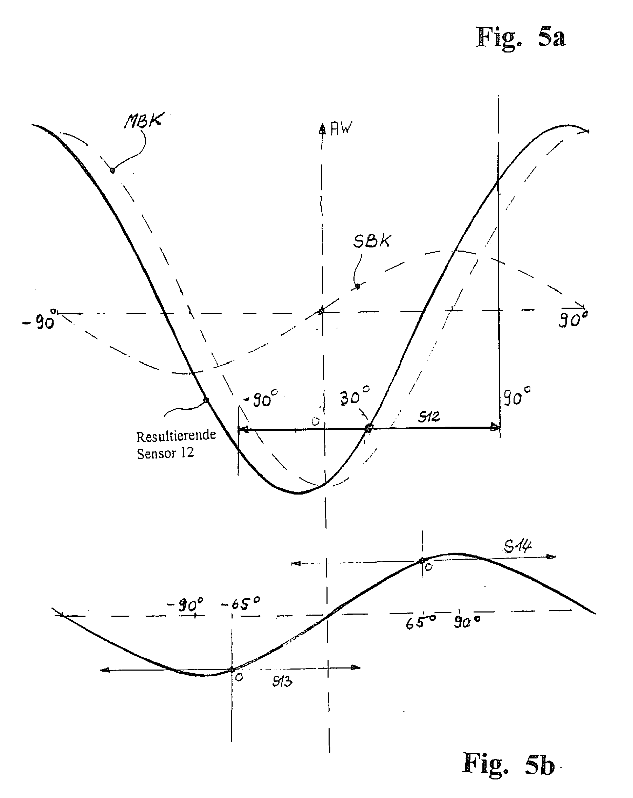

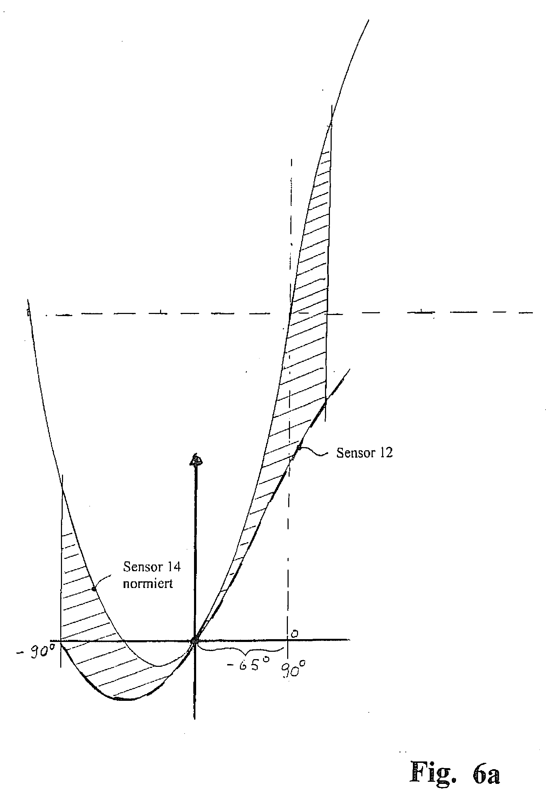

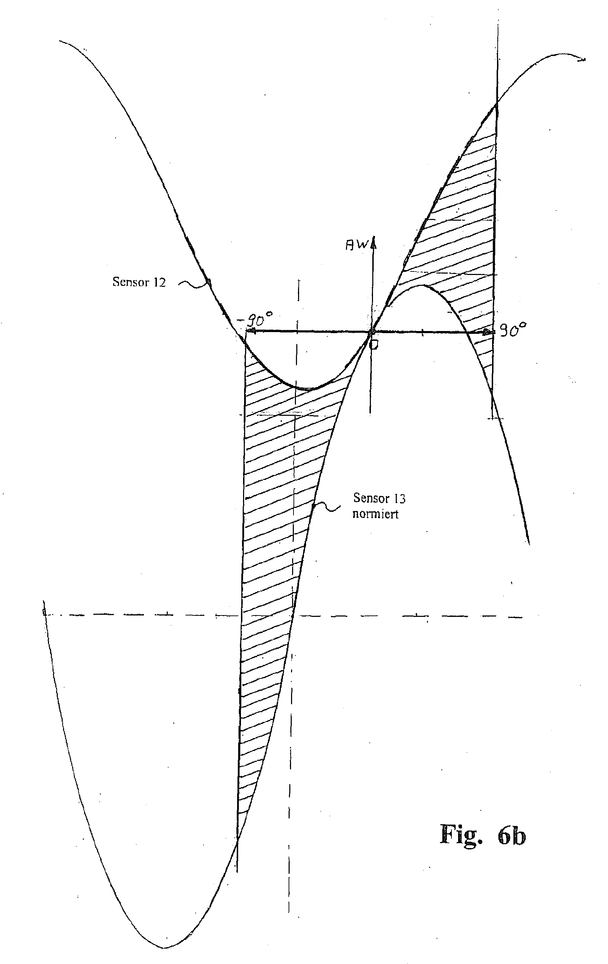

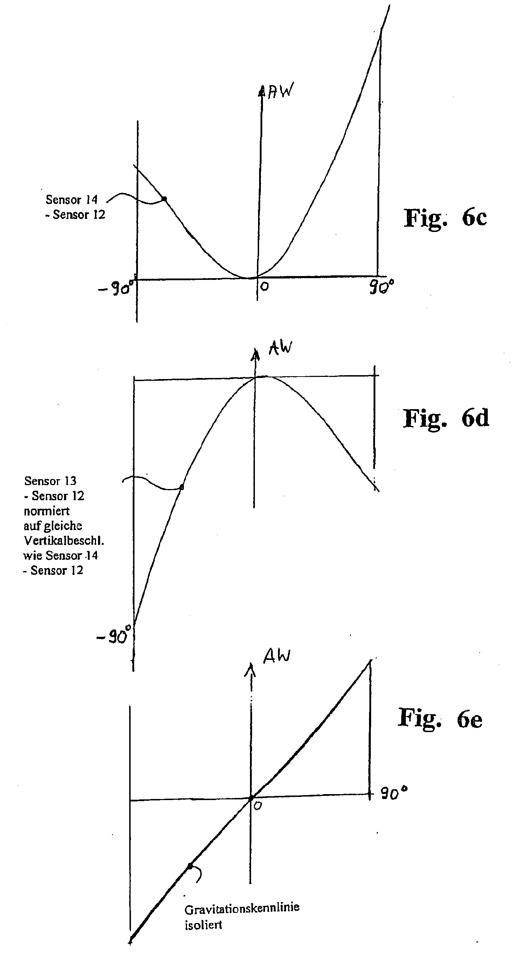

Der Kennlinienverlauf für statische Beschleunigung, also für unterschiedliche Positionswinkel des Sensorblockes gegenüber der horizontalen Ebene, ist bei Sensor 1 bzw. 4 durch die Änderung der Gravitationskraft senkrecht zur Stabebene gegeben. Es ergibt sich der in Fig. 2 dargestellte linke Kennlinienverlauf. Beim abgewinkelten Sensor 2 bzw. 3 ist dem Kennlinienverlauf von Sensor 1 bzw. 4 ein weiterer Anteil überlagert, welcher sich durch den als Hebel wirkenden abgewinkelten Abschnitt 9.2 ergibt. Dies zeigt der in Fig.2 rechts dargestellte Kennlinienverlauf. Eine ausführliche Erläuterung erfolgt weiter unter Fig. 5 und 6.

Das Verfahren zur Bestimmung eines Bewegungsvorganges mit statischen und dynamischen Beschleunigungskomponenten bei dieser Anordnung mit vier Sensoren 1 - 4 mit Masseelementen 5, 6, die auf mindestens einer Grundplatte 7 jeweils mit einer elastischen Abstützung 8, 9 angeordnet sind und die in einer oder parallelen jeweils senkrecht zur Grundplatte 7 befindlichen Ebenen durch Beschleunigungskräfte auslenkbar sind, wobei die Ebene oder die Ebenen mit allen Grundplatten 7 einen 90°-Winkel einschließen und wobei die Abstützungen 8, 9 für eine der Beschleunigungsformen dynamisch oder statisch gleiche und für die andere Beschleunigungsform eine unterschiedliche Reaktionscharakteristik aufweisen, wobei jeweils zwei Abstützungen gleich, aber spiegelsymmetrisch angeordnet sind und die Auslenkungen der Abstützungen oder äquivalente physikalische Größen an Messpunkten 10 erfassbar und rechentechnisch verarbeitbar sind, sieht vor, dass die Auslenkung oder eine andere physikalische Größe mindestens eines Messpunktes 10 der jeweiligen Sensoren 1 - 4 unter Beschleunigungsbedingungen zeitgleich gemessen wird und die Messwerte einer mathematische Eliminierung - hier einer Differenzbildung - unterzogen werden, die mindestens umfasst:

### 1. Differenzbildung

Die dynamische Beschleunigungskomponente, die parallel zur Grundplatte 7 gerichtet ist (Längsbeschleunigung), wird kompensiert, indem eine Differenzbildung der gemessenen Auslenkungswerte oder der äquivalenten physikalische Größen der Sensoren 1 und 2 als einem Paar und der spiegelgleich angeordneten Sensoren 3 und 4 als weiterem Paar erfolgt.

Voraussetzung dafür ist, dass die Sensoren 1 bis 4 jeweils auf die gleiche Reaktion auf Längsbeschleunigung normiert sind. Voraussetzung für den Erhalt aussagefähiger Berechnungsergebnisse ist weiter, dass die Gravitationskennlinien der Sensoren 1 bis 4 in den beiden Quadranten voneinander abweichende Kennlinienverläufe aufweisen. Je stärker die Abweichung, desto geringer sind die Einflüsse resultierend aus Fertigungstoleranzen, Messfehlern bei der Messung der Auslenkung usw.

Die in Fig. 2 dargestellten Sensoren 1 und 2 des ersten Sensorpaares erfüllen diese Bedingungen. Der gewählte Winkel β beträgt um die 30° und die Länge des Schenkels 9.2 entspricht etwa dem Dreifachen der Länge des Schenkels 9.1 und der Stababstützung 8.1.

Während die Längsbeschleunigung auf den Sensor 1 nur in Form einer Schubbiegung wirkt, überlagern sich bei Sensor 2 Schubbiegung und Momentenbiegung.

Um bei Sensor 1 die gleiche Reaktion, d. h. Auslenkung, auf Längsbeschleunigung im Sensorausgangssignal zu erhalten wie bei Sensor 2, ist somit eine Verstärkung des Ausgangssignals um einen bestimmten Faktor notwendig.

Dies vorausgeschickt sind in Fig. 2 die Kennlinien der Gravitation dargestellt, links für Sensor 1 und rechts für Sensor 2. Im Zuge der 1. Differenzbildung zwischen diesen Kennlinien ist die Längsbeschleunigung eliminiert, denn die gleiche Reaktion der beiden Sensoren 1 und 2 auf Längsbeschleunigung im Messpunkt 10 war Voraussetzung.

Die Fig. 3a und Fig. 3b zeigen den Differenzverlauf der Gravitationsverläufe der Sensoren nach der 1. Differenzbildung.

Die obere Kennlinie (Fig. 3a) entspricht dabei der Differenzbildung zwischen den Sensoren 1 und 2 und die mittlere Kennlinie (Fig. 3b) der Differenzbildung von den Sensoren 3, 4.

### 2. Differenzbildung

Die vertikal zur Grundplatte 7 wirkende dynamische Beschleunigungskomponente wird kompensiert durch eine Differenzbildung zwischen den um die dynamische, parallel zur Grundplatte 7 gerichtete Beschleunigungskomponente bereinigten Werte der Sensorpaare 1, 2 und 3, 4, ebenfalls im einfachsten Fall durch Subtraktion oder wo notwendig durch eine Pegelanpassung der Messwerte vor der Differenzbildung, um tatsächlich den Messwertanteil der vertikalen dynamischen Beschleunigung zu eliminieren.

In einer beispielhaften Ausführungsform ist vorgesehen, dass eine Pegelanpassung erfolgt, derart, dass die Charakteristiken einer Gravitationskennlinie nicht beeinflusst werden, die Beschleunigungskomponenten jedoch eliminiert werden können.

Durch das hier verwendete identische, aber spiegelgleich angeordnete Sensorpaar 3, 4, deren Ausgangssignale bei der ersten Differenzbildung in gleicher Weise bearbeitet wurden wie beim Sensorpaar 1, 2, kann die Vertikalbeschleunigungskomponente durch Subtraktion erfolgen, da auf jeden Sensor die gleiche Beschleunigungskraft einwirkt, folglich auch in den Differenzverläufen nach der 1. Differenzbildung die gleichen Vertikalbeschleunigungsanteile enthalten sind.

Bei einer Differenzbildung zwischen den Paaren 1, 2 und 3, 4 heben sich die vertikalen dynamischen Beschleunigungen zur Grundplatte 7, dargestellt in Fig. 3a und 3b, gegenseitig auf.

In die vorgenannten Differenzbildungen sind als Bestandteil der Messwerte der einzelnen Sensoren 1 - 4 auch die Anteile der statischen Beschleunigung als bisher unbekannte Größe enthalten. Nach den vorgenannten Eliminierungen bleibt dieser Wert als Differenzwert, dem ein bestimmter Winkel (α) zuzuordnen ist, übrig. In Fig. 3c ist der vollständige Kennlinienverlauf der Differenzwerte dargestellt.

Durch diese Subtraktion wird zudem erreicht, dass wegen der Unsymmetrie der Gravitationskennlinien in den beiden Quadranten in einem Quadrant die Gravitationswerte (α) negativ und im anderen Quadranten positiv sind, d. h. eine eindeutige Zuordnung zwischen den Sensorausgangssignalen und Winkelwert in beiden Quadranten vorliegt.

Der so ermittelte Winkel (α) der Grundplatte 7 gegenüber der Horizontalen 11 wird zur Bestimmung der parallelen Beschleunigung (PB) zur Grundplatte 7 und der vertikalen Beschleunigung (VB) zur Grundplatte 7 genutzt.

Ist die Bestimmung eines Bewegungsvorganges mit statischen und dynamischen Beschleunigungskomponenten vorgesehen, bei dem die vertikale Beschleunigung vernachlässigbar ist und wo nur ein Quadrant von Interesse ist, kann mit zwei Sensoren 1 - 2 gearbeitet werden, wobei die Sensoren 1, 2 wie vorab beschrieben angeordnet sind und die Abstützungen 8, 9 für eine der Beschleunigungsformen dynamisch oder statisch gleiche und für die andere Beschleunigungsform eine unterschiedliche Reaktionscharakteristik aufweisen.

Die Auslenkung oder eine andere physikalische Größe mindestens eines Messpunktes 10 der Sensoren 1, 2 wird unter Beschleunigungsbedingungen, bei denen die Vertikalbeschleunigung vernachlässigbar ist, zeitgleich gemessen und die Messwerte werden einer Differenzbildung unterzogen, die mindestens umfasst:

Die dynamische Beschleunigungskomponente, die parallel zur Grundplatte 7 gerichtet ist, wird kompensiert, indem eine Differenzbildung, im einfachsten Fall eine Subtraktion der gemessenen Auslenkungswerte oder der äquivalenten physikalische Größen der Sensoren 1 und 2 erfolgt.

Die Differenzbildung zur Eliminierung der vertikalen Beschleunigung entfällt, da deren Vernachlässigung als Voraussetzung für diesen Bewegungsvorgang angenommen wurde.

Auch hier ist die vorgenannte Differenzbildung als Bestandteil der Messwerte der einzelnen Sensoren 1 - 2 der Anteil der statischen Beschleunigung als bisher unbekannte Größe enthalten. Nach den vorgenannten Eliminierungen bleibt dieser Wert als Differenzwert, dem ein bestimmter Winkel (α) zuzuordnen ist, übrig.

Der so ermittelte Winkel (α) der Grundplatte 7 gegenüber der Horizontalen 11 wird zur Bestimmung der parallelen Beschleunigung (PB) zur Grundplatte 7 genutzt, was rechentechnisch erfolgt.

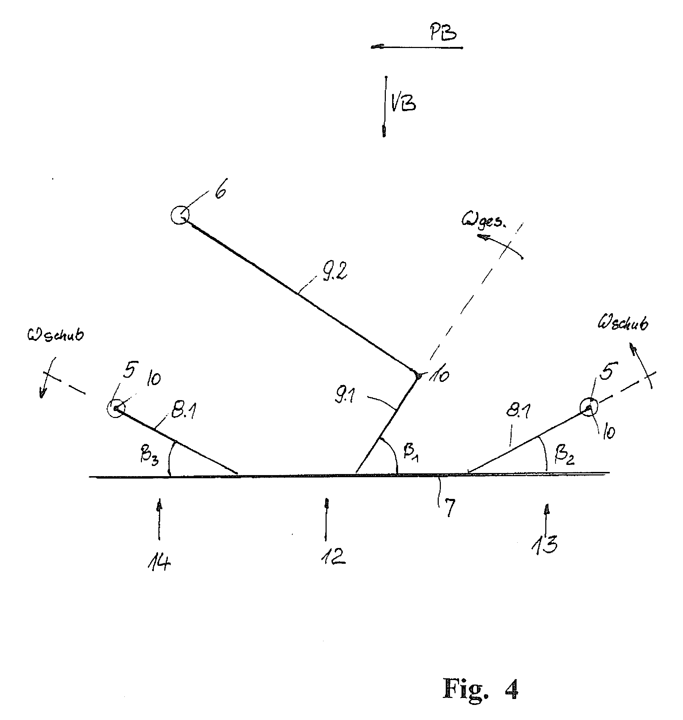

Fig. 4 zeigt einen Sensorblock mit drei Sensoren 12-14 als eine vorteilhafte Ausgestaltung der vorgenannten Ausführung mit vier Sensoren 1-4.

Der Sensor 12 übernimmt bei dieser Anordnung eine Doppelfunktion. Er ist einmal Bestandteil des Sensorpaares 12, 13 und einmal Bestandteil des Sensorpaares 12, 14.

Um auch hier das vorgenannte Prinzip der schrittweisen Eliminierung von Beschleunigungskomponenten als Bestandteil eines Messwertes durchführen zu können, ist in einer vorteilhaften Ausführung eine spezielle Anordnung der Abstützungen 8, 9 vorgenommen worden.

Ausdrücklich sei aber darauf hingewiesen, dass diese spezielle Ausführung das System nicht beschränkt. Vielmehr sind auch andere Längenverhältnisse und Winkel möglich.

Für den Winkel β₂ zwischen der Abstützung 8.1 und der Grundplatte 7 des Sensors 13 ist hier ein Wert von 25° gewählt worden. Die Abstützung 8.1 des Sensors 14 ist dazu spiegelsymmetrisch angeordnet, und um den Winkel β₃ = - 25° gegenüber der Grundplatte 7 geneigt. Die Neigung der Abstützung 9.1 des Sensors 12 weist einen Neigungswinkel zur Grundplatte 7 von β₁ auf, hier 60°.

Die Längen der Stababstützungen 8.1 der Sensoren 13 und 14 sind gleich der Länge des Abschnittes 9.1 vom Sensor 12, während die Länge 9.2 des Sensors 12 dem Dreifachen der Länge des Abschnittes 9.1 entspricht. Allgemein erweist es sich als vorteilhaft, wenn der Abschnitt 9.1 im Anfangsbereich des zweiten Abstützelements 9 jeweils kürzer ist als der abgewinkelte Abschnitt 9.2.

Als vorteilhaft erweist es sich weiter, wenn bei mindestens drei Masse- 5, 6 und/oder Abstützelementen 8, 9, die auf mindestens einer Grundplatte 7 angeordnet sind, der Winkel β₂ zwischen einem ersten Abstützelement 8.1 und der Grundplatte 7 positiv gerichtet ist, während ein zweites Abstützelement 8.1 um den Winkel β₃ negativ gegenüber der Grundplatte 7 geneigt ist und damit in eine andere Richtung als das erste Abstützelement 8.1 weist.

Um bei Sensor 13 bzw. 14 die gleiche Reaktion, d. h. Auslenkung auf Längsbeschleunigung im Sensorausgangssignal wie bei Sensor 12 zu erhalten, ist eine Verstärkung des Ausgangssignals um einen bestimmten Normierungsfaktor notwendig.

Bei der hier dargestellten Ausführung berechnet sich dieser für die Längsbeschleunigung beispielsweise zu 5,6, wobei bei Sensor 12 zu berücksichtigen sind die Schubbiegung und die Momentenbiegung, während die Längsbeschleunigung auf die Sensoren 13 und 14 nur in Form einer Schubbiegung wirkt und noch dazu gleich ist.

Fig. 5 zeigt beispielhaft die Gravitationskennlinien für einen Sensorblock mit den Sensoren 12 bis 14 gemäß Fig. 4.

Die Gravitationskennlinie für elastisch abgestützte Massen hat einen sinusförmigen Verlauf, wie er in Fig. 5 a und b dargestellt ist.

Bei einer bestimmten Anfangswinkellage, hier bei den Sensoren 13 und 14 mit den Neigungswinkeln β₁ und β₂ zur Grundplatte, verschiebt sich jeweils der Arbeitspunkt auf der Kennlinie um den entsprechenden Winkel 90°- β₁, hier 65°, und -(90°- β₂), hier -65° gegenüber den Bezugskoordinaten mit β = 90°. Die Arbeitsbereiche der Sensoren 13 und 14 sind mit S13 und S14 angegeben. Analoges gilt für Sensor 12 mit dem Arbeitsbereich S12.

In der Fig. 5a ist die resultierende Kennlinie des Sensors 12 unter dem Einfluss der Gravitation dargestellt.

Diese setzt sich zusammen aus den Kennlinienverläufen der Momentenbiegekomponente (MBK) und der Schubbiegekomponente (SBK).

In Fig. 5b ist der nichtnormierte Kennlinienverlauf der Sensoren 13 und 14 unter dem Einfluss der Gravitation dargestellt.

In den Fig. 6 wird die schrittweise mathematische Eliminierung der einzelnen Beschleunigungskomponenten gezeigt.

Um bei Sensor 13 bzw. 14 die gleiche Reaktion, d. h. Auslenkung auf Längsbeschleunigung im Sensorausgangssignal wie bei Sensor 12 zu erhalten, ist eine Verstärkung des Ausgangssignals um den oben angegebenen Normierungsfaktor notwendig. Nur dann führt die erste Differenzbildung zwischen den Auslenkungsmesswerten (Ausgangssignale AW) zu einer Eliminierung der Längsbeschleunigungskomponente.

In der Fig. 6a sind bezogen auf gleiche Arbeitsbereiche die Gravitationskennline des Sensors 12 und die normierte Kennlinie des Sensors 14, die durch Multiplikation mit dem Normierungsfaktor entstanden ist, dargestellt.

In der Fig. 6b sind bezogen auf gleiche Arbeitsbereiche die Gravitationskennline des Sensors 12 und die normierte Kennlinie des Sensors 13, die durch Multiplikation mit dem Normierungsfaktor entstanden ist, dargestellt.

Die Darstellungen lassen auch erkennen, dass die Voraussetzung für den Erhalt aussagefähiger Berechnungsergebnisse erfüllt ist, nämlich dass die Gravitationskennlinien der Sensoren in den beiden Quadranten voneinander abweichende Kennlinienverläufe aufweisen.

Werden nun, wie verfahrensgemäß vorgesehen ist, in der 1. Differenzbildung jeweils die Kennlinienverläufe in den Fig. 6a und 6b voneinander subtrahiert, was dem Inhalt der jeweils schraffierten Flächen entspricht, erhält man als resultierende Zwischenkennlinien die in Fig. 6c und 6d dargestellten. Die Fig. 6c stellt die Kennlinie die Differenzbildung von Sensor 14 und Sensor 12 und die Fig. 6d die Differenzbildung der Sensoren 13 und 12 dar. Die Darstellung in Fig. 6d ist dabei bereits normiert worden auf eine gleiche Vertikalbeschleunigung wie die Kennlinie in Fig. 6c, so dass bei der 2. Differenzbildung die Vertikalbeschleunigung tatsächlich eliminierbar ist.

Da die Auslenkung von Sensor 14 und Sensor 12 bei Vertikalbeschleunigung in die gleiche Richtung verlaufen, ist deren Differenzbetrag gegenüber dem Differenzbetrag von Sensor 13 und Sensor 12, bei welchen die Auslenkungen entgegengesetzt sind, geringer, so dass das Differenzsignal von Sensor 14 und 12 angehoben oder das Differenzsignal von Sensor 13 und Sensor 12 abgesenkt werden muss, um auf gleiche Pegel zu kommen.

Durch diese Normierung werden auch die Pegel der Differenzkennlinien angeglichen. Da die Reaktion auf Vertikalbeschleunigungen bei Sensor 14 und Sensor 13 wegen der Normierungsfaktoren hinsichtlich gleicher Längsbeschleunigung größer ist als die bei Sensor 12, werden die Vorzeichen der Differenzbildung durch diese Sensoren gegeben. Die Differenz von Sensor 14 und Sensor 12 ist daher negativ, die von Sensor 13 und Sensor 12 positiv, was bedeutet, dass bei der 2. Differenzbildung die Werte zu addieren sind, um die Vertikalbeschleunigung zu eliminieren.

Fig. 6e zeigt das Ergebnis der 2. Differenzbildung, so dass einem gemessenen Sensorausgangssignal ein bestimmter Winkel (α) zuzuordnen ist.

Der so ermittelte Winkel (α) der Grundplatte 7 gegenüber der Horizontalen 11 wird zur Bestimmung der vertikalen (VB) und der parallelen (PB) Beschleunigung zur Grundplatte 7 genutzt, was rechentechnisch erfolgt.

Bei der in Fig. 4 dargestellten Sensorkonstellation lässt sich somit auch durch mathematische Verknüpfung die gewünschte Gravitationskennlinie erreichen, wobei geringfügige Pegelanpassungen zur Eliminierung der Längs- als auch die Vertikalbeschleunigung die Charakteristik der Gravitationskennlinie nicht beeinflussen.

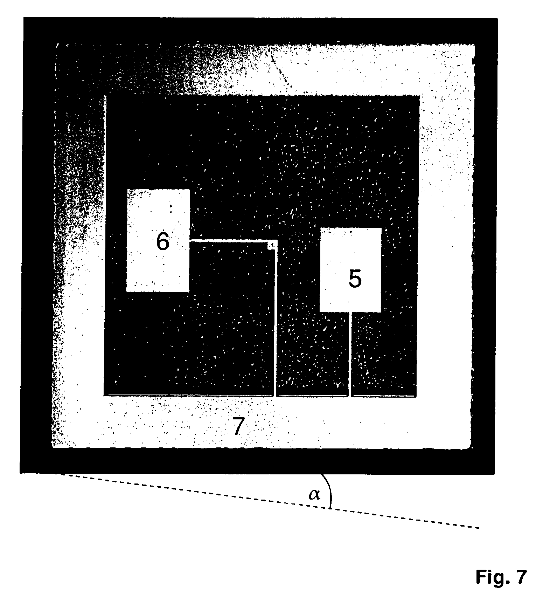

Fig. 7 zeigt eine erste Modellausführung für eine mikromechanische Ausführung mit 2 Sensoren. Die Anordnung der Sensoren 1, 2 ist als dreidimensionale Mikrostruktur in einem Trägermaterial ausgebildet mit Masseelementen 5, 6 und elastischen Abstützungen 8, 9, wobei als Trägermaterial vorzugsweise einkristallines Silizium (Si) oder Quarz oder Glas oder ein Lack eingesetzt ist.

Die Abstützung 8 der Masse 5 ist auch in der mikromechanischen Ausführung ein Stab 8.1 oder ein Streifen 8.1, wobei bei einem Streifen 8.1 dieser in der Streifenebene elastisch verformbar ist. Die Abstützung 9 der Masse 6 wird durch einen abgewinkelten oder gebogenen Stab oder Streifen gebildet mit den Abschnitten 9.1 und 9.2.

Analog gilt dies bei der Anordnung von drei oder vier Sensoren wie oben beschrieben. Im Weiteren werden deshalb nur noch Sensoren erwähnt.

In einer vorteilhaften Ausführung ist die dreidimensionale Mikrostruktur der Sensoren in einer Wanne des Trägermaterials ausgebildet, wobei Wannenwände eine Grundplatte 7 bilden.

Ebenso kann die dreidimensionale Mikrostruktur der Sensoren in einem gemeinsamen Rahmen des Trägermaterials angeordnet sein oder in einem Rahmen für jeden Sensor oder für Sensoren, wobei eine oder zwei parallele Rahmenseiten jeweils die Grundplatte 7 bilden.

Weiter ist vorgesehen, dass die dreidimensionale Mikrostruktur der Sensoren gekapselt ausgeführt ist, vorzugsweise vakuumierbar. Das hat den Vorteil, dass messwertverfälschende Gaswiderstände ausschließbar sind.

In einer weiteren vorteilhaften Ausführung ist in das Trägermaterial neben den Sensoren, d. h. den Abstützelementen 8, 9 mit Masseelement 5, 6, auch die Elektronik zur Auswertung der Messergebnisse integriert.

In einer beispielhaften Ausführungsform ist vorgesehen, dass die Abstützelemente 8, 9 mit Masseelement 5, 6 für die Messung in einem und/oder mehreren Quadranten in Sensorblöcken 11 angeordnet sind.

Die Herstellung der dreidimensionalen Mikrostruktur kann mittels herkömmlicher Verfahren wie das bulk micromachining, die LIGA-Technik, Prägen oder auch Elektroerodieren vorgenommen werden, ohne dass damit eine Beschränkung auf diese Verfahren vorgenommen sein soll.

Für das Ausmessen werden bevorzugt die optische Detektion von Referenzpunkten, die kapazitive Auswertung z. B. durch Abstandsmessung zwischen Abstützungen und Festpunkten und resistive Auswerteverfahren mittels Piezotechnik oder Dehnmessstreifen genutzt.

Mit der vorgeschlagenen Sensortechnik lassen sich Bewegungsvorgänge mit statischen und dynamischen Beschleunigungskomponente allgemeinster Art ohne Vernachlässigung von einzelnen Beschleunigungskomponenten analysieren. Durch die kostengünstige mikromechanische Ausführung unterliegt diese Sensortechnik keiner Einsatzbeschränkung. Sie wird nicht nur in der Industrie, sondern als Massenprodukt auch bei Konsumgütern zu einer neuen Qualität führen.

Vorteilhafte Anwendungen der Sensoren oder Sensorenblöcke werden insbesondere gesehen
- in einer Analyse allgemeiner Bewegungen von Körpern. Hierzu gehören insbesondere Fahrtenschreiberfunktionen, die Analyse von Bewegungsabläufen im Sport wie beim Schwimmen, Werfen, Stoßen, im Skisport die Analyse der Skibewegung und die des Läufers, beim Boxen zur Schlaganalyse sowie Körperzustandsanalysen allgemeinster Art.
- in einer Analyse von Bewegungen, um der Bewegung eine bestimmte Funktion zuzuordnen. Denkbar ist das Auslösen von Ein- und Ausschaltvorgängen und anderen auch komplizierteren Funktionsabläufen durch Hand- und/oder andere Körperbewegungen. Dazu gehören auch das Lesen von Gebärdensprache und die Schrifterkennung beim Schreiben.
- in einer Analyse der Bewegung zum Vollzug einer gewollten Bewegung durch technische Mittel in einem Regelkreis. Hierbei sind insbesondere Maschinen und Fahrzeugsteuerungen von besonderer Bedeutung, aber auch Prothesenbewegungen und Regelkreise zur Aufrechterhaltung von Körperfunktionen.

In einer beispielhaften Verwendung der zur getrennten Erfassung einer statischen und einer dynamischen Beschleunigung geeigneten Vorrichtung (nachfolgend auch Dynamikrekorder genannt) ist vorgesehen, die Vorrichtung als Fahrten- oder Unfalldatenschreiber zu verwenden. Besonders vorteilhaft ist dabei der Einsatz für boden-, wasser- und luftgebundene Fahrzeuge. Die Bewegungen dieser Fahrzeuge sind mit deutlichen Beeinflussungen durch dynamische Vorgänge beeinflusst. Bei diesen Fahrzeugen treten durch Steigungen, Luft- oder Wasserbewegungen neben der Bewegungsbeschleunigung auch Schräglagenänderungen auf. Zur Aufzeichnung und Rekonstruktion der Bewegungen ist eine Trennung der Beschleunigungsformen erforderlich. Durch Aufzeichnen der dynamischen Werte lassen sich beispielsweise auch Unfälle rekonstruieren.

Ein weiteres Verwendungsgebiet der Vorrichtung liegt in der Bewegungserfassung von Transportgütern. Die Trennung von statischer und dynamischer Beschleunigung ist hier erforderlich, um Schrägstellungen, Verrutschen von Ladungsgut sowie andere Positionsänderungen zu erfassen, um ggf. Signalisierungen auszulösen.

Eine weitere beispielhafte Verwendung sieht die Bewegungserfassung von Maschinen und/oder Baufahrzeugen vor. Zur Kontrolle und Steuerung von Kränen, Baggern oder sonstigen Baumaschinen ist die Trennung der Beschleunigungsformen unerlässlich, da durch die Geländebeschaffenheit und Wind- und Bodeneinflüsse sich beispielsweise Lageänderungen von Geräten und Lasten ergeben.

Eine andere beispielhafte Verwendung des Dynamikrekorders liegt in der Navigation, insbesondere der Erfassung und Stabilisierung einer Position eines Fahrzeugs. Zur Erfassung und Stabilisierung einer Position bei jeder Art von Fluggeräten von Großflugzeugen bis zu Drohnen oder Modellflugzeugen ist die Trennung der Beschleunigungsformen Voraussetzung.

Eine weitere beispielhafte Verwendung besteht in den getrennten Erfassungen von Lagewinkel zur horizontalen Ebene und Bewegung der Roboterarme, die für jede Art der Robotertätigkeit unerlässlich ist.

In einer weiteren wichtigen Ausführungsform ist die Verwendung des Dynamikrekorders im Sportbereich vorgesehen. Nahezu jede Bewegung im Sportbereich beinhaltet statische und dynamische Beschleunigungskomponenten. Zur Erfassung und Aufzeichnung dieser Beschleunigungskomponenten ist in einer beispielhaften Ausführungsform vorgesehen, mindestens einen Dynamikrekorder in Kleidungsstücke oder Sportgeräte zu integrieren bzw. mit diesen zu kombinieren. So kann beispielsweise vorgesehen sein, den Dynamikrekorder z. B. in Sportschuhe, Tennis-, Golf- und/oder Hockeyschläger, in Skier, in Boxhandschuhen usw. zu integrieren. Die so gewonnenen Aufzeichnungen wären für Trainingszwecke, zur Berichterstattung, zum Test und zur Dokumentation des eigenen Leistungsvermögens verwendbar.

Ein anderes Beispiel für eine Verwendung der zur getrennten Erfassung einer statischen und einer dynamischen Beschleunigung geeigneten Vorrichtung ist die Bewegungserfassung von Personen. Analog zu den Bewegungen im Sportbereich treten auch bei Bewegungen beispielsweise am Handgelenk beide Beschleunigungsformen auf. Aus einer Analyse dieser Bewegungen lassen sich Aussagen über die Bewegungsursachen ableiten, aus welchen eine Art Tagesprofil mit den Grundzuständen der Person (Liegen, Sitzen, Stehen, Gehen, Laufen, Sporttreiben) sowie mit näheren Spezifizierungen der ausgeübten Tätigkeiten und der unterlagerten Bewegungen (z. B. Autofahren) erstellt werden kann. Hierfür ließe sich ein Dynamikrekorder beispielsweise in eine Uhr integrieren.

Ein weiteres Beispiel für eine Verwendung eins Dynamikrekorders ist die Analyse von Schreibbewegungen. Mit einer Analyse von Schreibbewegungen ließe sich beispielsweise Handschrift in Druckschrift umsetzten. Da Schreibbewegungen statische und dynamische Beschleunigungskomponenten beinhalten, kann auch für eine derartige Anwendung nur ein Beschleunigungssensor verwendet werden, welcher in der Lage ist, die beiden Einflussgrößen zu trennen. Ein Dynamikrekorder könnte z. B. im vorderen Bereich eines Kugelschreibers integriert sein.

In einer weiteren wichtigen Ausführungsform ist die Verwendung des Dynamikrekorders im Computerspielebereich vorgesehen. Auch für Computerspiele, bei welchen Bewegungen von Personen maßgeblich das Spiel bestimmen, kann durch die Trennung von statischer und dynamischer Beschleunigung der Bewegung eines Spielers diese Spielerbewegungen naturgetreu in das Spiel einbeziehen und damit völlig neuartige Spiele ermöglichen.

### Bezugszeichenliste

- 1: Sensor
- 2: Sensor
- 3: Sensor
- 4: Sensor
- 5: Masseelement
- 6: Masseelement
- 7: Grundplatte
- 8: Abstützung
- 8.1: Stababstützung
- 9: Abstützung
- 9.1: Abschnitt der Abstützung 9
- 9.2: Abschnitt der Abstützung 9
- 10: Messpunkt
- 11: Horizontale
- 12: Sensor
- 13: Sensor
- 14: Sensor

- G: Gravitation
- AW: Ausgangssignal
- PB: parallel zur Grundplatte gerichtete Beschleunigung
- VB: vertikal zur Grundplatte gerichtete Beschleunigung
- MBK: Momentenbiegekomponente
- SBK: Schubbiegekomponente

## Patentansprüche

1. Vorrichtung zur Erfassung mindestens einer Beschleunigung, umfassend
- mindestens eine Grundplatte (7) und
- mindestens zwei Masseelemente (5, 6),
wobei jedes Masseelement (5, 6) über ein elastisches Abstützelement (8, 9) mit der mindestens einen Grundplatte (7) verbunden ist, und wobei die Abstützelemente (8, 9) in einer gemeinsamen Ebene oder in parallelen Ebenen auslenkbar sind und die mindestens zwei Masse- (5, 6) und/oder Abstützelemente (8, 9) jeweils zumindest einen Messpunkt (10) aufweisen, wobei die gemeinsame Ebene oder die parallelen Ebenen jeweils senkrecht zur Grundplatte (7) ausgerichtet sind, und wobei
die Abstützelemente (8, 9) mindestens eines ersten (5) und mindestens eines zweiten Masseelements (6) derart ausgelegt sind, dass das Abstützelement (8) des mindestens einen ersten Masseelements (5) und das Abstützelement (9) des mindestens einen zweiten Masseelements (6) in den Messpunkten (10) bezüglich einer ersten, in einer ersten Richtung wirkenden, dynamischen oder statischen Komponente einer in der gemeinsamen Ebene oder in den parallelen Ebenen wirkenden Beschleunigung dieselbe Reaktionscharakteristik und in der senkrecht zu der ersten Komponente wirkenden anderen Komponente der Beschleunigung voneinander verschiedene Reaktionscharakteristiken aufweisen.

2. Vorrichtung nach Anspruch 1,
**dadurch gekennzeichnet, dass**
die Vorrichtung mindestens zwei erste Abstützelemente (8) mit Masseelement (5) und mindestens ein zweites Abstützelement (9) mit Masseelement (6) oder dass die Vorrichtung mindestens zwei erste und zwei zweite Abstützelemente (8, 9) mit Masseelement (5, 6) umfasst.

3. Vorrichtung nach Anspruch 1 oder 2,
**dadurch gekennzeichnet, dass**
die Anordnung der Abstütz- (8, 9) und Masseelemente (5, 6) als dreidimensionale Mikrostruktur in einem Trägermaterial ausgebildet ist, wobei als Trägermaterial vorzugsweise einkristallines Silizium (Si) oder Quarz oder Glas oder ein Lack eingesetzt ist.

4. Vorrichtung nach einem der voranstehenden Ansprüche,
**dadurch gekennzeichnet, dass**
jeweils zwei Abstützelemente (8, 9) gleich ausgeführt, aber spiegelsymmetrisch auf der mindestens einen Grundplatte (7) angeordnet sind.

5. Vorrichtung nach einem der voranstehenden Ansprüche,
**dadurch gekennzeichnet, dass**
die ersten Abstützelemente (8) in mechanischer oder mikromechanischer Ausführung als Stab (8.1) oder als Streifen (8.1) realisiert sind, wobei bei einem Streifen (8.1) dieser in der Streifenebene elastisch verformbar ist und die zweiten Abstützelemente (9) durch einen abgewinkelten oder gebogenen Stab oder Streifen realisiert sind mit den Abschnitten (9.1, 9.2).

6. Vorrichtung nach Anspruch 5,
**dadurch gekennzeichnet, dass**
der Abschnitt (9.1) des Stabes oder Streifens der zweiten Abstützelemente (9) im Anfangsbereich von der Grundplatte (7) aus gesehen in der Form und der Verformbarkeit jeweils dem Stab oder Streifen (8.1) der ersten Abstützelemente (8) entspricht.

7. Vorrichtung nach einem der Ansprüche 3 bis 6
**dadurch gekennzeichnet, dass**
die dreidimensionale Mikrostruktur in einer Wanne des Trägermaterials ausgebildet ist, wobei die Wannenwände eine Grundplatte (7) bilden.

8. Verfahren zur Erfassung mindestens einer Beschleunigung, wobei eine Vorrichtung verwendet wird, welche
- mindestens eine Grundplatte (7) und
- mindestens zwei Masseelemente (5, 6)
umfasst, und wobei jedes Masseelement (5, 6) über ein elastisches Abstützelement (8, 9) mit der mindestens einen Grundplatte (7) verbunden ist, die Abstützelemente (8, 9) in einer gemeinsamen Ebene oder in parallelen Ebenen auslenkbar sind und die mindestens zwei Masse- (5, 6) und/oder Abstützelemente (8, 9) jeweils zumindest einen Messpunkt (10) aufweisen, wobei die gemeinsame Ebene oder die parallelen Ebenen jeweils senkrecht zur Grundplatte (7) ausgerichtet sind, und wobei
die Abstützelemente (8, 9) mindestens eines ersten (5) und mindestens eines zweiten Masseelements (6) derart ausgelegt sind, dass das Abstützelement (8) des mindestens einen ersten Masseelements (5) und das Abstützelement (9) des mindestens einen zweiten Masseelements (6) in den Messpunkten (10) bezüglich einer ersten, in einer ersten Richtung wirkenden Komponente, dynamisch oder statisch, einer in der gemeinsamen Ebene oder in den parallelen Ebenen wirkenden Beschleunigung dieselbe Reaktionscharakteristik und in der senkrecht zu der ersten Komponente wirkenden anderen Komponente der Beschleunigung voneinander verschiedene Reaktionscharakteristiken aufweisen, und wobei
die Auslenkung der Messpunkte (10) beschreibende Daten zumindest eines ersten (5, 8) und zumindest eines zweiten Masse- (6) und/oder Abstützelements (9) erfasst, durch Auswertung der erfassten Daten die in der ersten Richtung wirkende Komponente der Beschleunigung eliminiert und
bei vernachlässigbarer in die zweite Richtung wirkenden Komponente das um die in die erste Richtung wirkende Komponente bereinigte Ergebnis zur Rückermittlung der in die erste Richtung wirkenden Komponente genutzt wird und das um die in die erste Richtung wirkende Komponente bereinigte Ergebnis als statische Beschleunigung und die in die erste Richtung wirkende Komponente als dynamische Beschleunigung erfasst wird.

9. Verfahren zur Erfassung mindestens einer Beschleunigung, wobei eine Vorrichtung verwendet wird, welche
- mindestens eine Grundplatte (7) und
- mindestens drei Masseelemente (5, 6)
umfasst, und wobei jedes Masseelement (5, 6) über ein elastisches Abstützelement (8, 9) mit der mindestens einen Grundplatte (7) verbunden ist, die Abstützelemente (8, 9) in einer gemeinsamen Ebene oder in parallelen Ebenen auslenkbar sind und die mindestens drei Masse- (5, 6) und/oder Abstützelemente (8, 9) jeweils zumindest einen Messpunkt (10) aufweisen, wobei die gemeinsame Ebene oder die parallelen Ebenen jeweils senkrecht zur Grundplatte (7) ausgerichtet sind, und wobei
die Abstützelemente (8, 9) mindestens zweier erster (5) und mindestens eines zweiten Masseelements (6) derart ausgelegt sind, dass die Abstützelemente (8) der mindestens zwei ersten Masseelemente (5) und das Abstützelement (9) des mindestens einen zweiten Masseelements (6) in den Messpunkten (10) bezüglich einer ersten, in einer ersten Richtung wirkenden Komponente, dynamisch oder statisch, einer in der gemeinsamen Ebene oder in den parallelen Ebenen wirkenden Beschleunigung dieselbe Reaktionscharakteristik und in der senkrecht zu der ersten Komponente wirkenden anderen Komponente der Beschleunigung voneinander verschiedene Reaktionscharakteristiken aufweisen, und wobei
die Auslenkung der Messpunkte (10) beschreibende Daten zumindest von zwei ersten (5, 8) und zumindest eines zweiten Masse- (6) und/oder Abstützelements (9) erfasst, durch Auswertung der von dem Masseelement (5) eines ersten der mindestens zwei ersten (5, 8) und des zweiten Masse- (6) und/oder Abstützelements (9) erfassten Daten und durch Auswertung der von dem Masseelement (5) eines zweiten der mindestens zwei ersten (5, 8) und des zweiten Masse- (6) und/oder Abstützelements (9) erfassten Daten jeweils die in der ersten Richtung wirkende Komponente der Beschleunigung eliminiert und
durch Auswertung der beiden um die in die erste Richtung wirkende Komponente bereinigten Ergebnisse die in die zweite Richtung wirkende Komponente eliminiert und
das um die in die zweite Richtung wirkende Komponente bereinigte Ergebnis zur Rückermittlung der in die erste und zweite Richtung wirkenden Komponenten genutzt wird und das um die in die erste und zweite Richtung wirkenden Komponenten bereinigte Ergebnis als statische Beschleunigung und die in die erste und zweite Richtung wirkenden Komponenten als dynamische Beschleunigung erfasst werden.

10. Verfahren nach Anspruch 9,
**dadurch gekennzeichnet, dass**
mindestens zwei erste und zweite Masse- (5, 6) und Abstützelemente (8, 9) vorgesehen sind und
durch Auswertung der von dem Masseelement (5) eines ersten der mindestens zwei ersten (5, 8) und eines ersten der mindestens zwei zweiten Masse- (6) und/oder Abstützelemente (9) erfassten Daten und durch Auswertung der von dem Masseelement (5) eines zweiten der mindestens zwei ersten (5, 8) und eines zweiten der mindestens zweiten Masse- (6) und/oder Abstützelemente (9) erfassten Daten jeweils die in der ersten Richtung wirkende Komponente der Beschleunigung eliminiert und
durch Auswertung der beiden um die in die erste Richtung wirkende Komponente bereinigten Ergebnisse die in die zweite Richtung wirkende Komponente eliminiert und
das um die in die zweite Richtung wirkende Komponente bereinigte Ergebnis zur Rückermittlung der in die erste und zweite Richtung wirkenden Komponenten genutzt wird und das um die in die erste und zweite Richtung wirkenden Komponenten bereinigte Ergebnis als statische Beschleunigung und die in die erste und zweite Richtung wirkenden Komponenten als dynamische Beschleunigung erfasst werden.

11. Verfahren nach einem der Ansprüche 8 bis 10,
**dadurch gekennzeichnet, dass**
der Winkel mindestens einer Grundplatte (7) bezüglich der statischen Beschleunigung ermittelt wird.

12. Verwendung einer Vorrichtung gemäß einem der Ansprüche 1 bis 7, wobei mindestens ein Lageparameter zumindest von Teilen der Vorrichtung im Raum ermittelt wird.

13. Verwendung nach Anspruch 12,
**dadurch gekennzeichnet, dass**
die Lageermittlung eine Ermittlung einer Komponente der Beschleunigung umfasst, die durch die Gravitation hervorgerufen wird und/oder
dass die Verwendung zumindest einen der folgenden Vorgänge umfasst:
- eine Steuerung von Prozessen,
- eine Analyse allgemeiner Bewegungen von Körpern,
- eine Analyse einer Bewegung, um der Bewegung eine bestimmte Funktion zuzuordnen und/oder zum Vollzug einer gewollten Bewegung durch technische Mittel in einem Regelkreis,
- eine Erfassung einer Positionsänderung eines Objekts,
- eine Schräglagedetektion eines Objekts,
- eine Lagestabilisierung eines Objekts,
- eine Analyse von Schreibbewegungen.

14. Computerprogramm, das es einer Datenverarbeitungseinrichtung ermöglicht, nachdem es in Speichermittel der Datenverarbeitungseinrichtung geladen worden ist, ein Verfahren zur Erfassung mindestens einer Beschleunigung gemäß einem der Ansprüche 8 bis 11 durchzuführen und/oder das eine zur getrennten Erfassung einer statischen und einer dynamischen Beschleunigung geeignete Vorrichtung gemäß einem der Ansprüche 1 bis 7, nachdem das Computerprogramm in Speichermittel der Vorrichtung geladen worden ist, so konfiguriert, dass die Vorrichtung für eine Verwendung gemäß einem der Ansprüche 12 oder 13 nutzbar ist.

15. Computerlesbares Speichermedium, auf dem ein Programm gespeichert ist, das es einer Datenverarbeitungseinrichtung ermöglicht, nachdem es in Speichermittel der Datenverarbeitungseinrichtung geladen worden ist, ein Verfahren zur Erfassung mindestens einer Beschleunigung gemäß einem der Ansprüche 8 bis 11 durchzuführen und/oder auf dem ein Programm gespeichert ist, das eine zur getrennten Erfassung einer statischen und einer dynamischen Beschleunigung geeignete Vorrichtung gemäß einem der Ansprüche 1 bis 7, nachdem das Computerprogramm in Speichermittel der Vorrichtung geladen worden ist, so konfiguriert, dass die Vorrichtung für eine Verwendung gemäß einem der Ansprüche 12 oder 13 nutzbar ist.

## Claims

1. A device for recording at least one acceleration, comprising
- at least one baseplate (7) and
- at least two mass elements (5, 6),
wherein each mass element (5,6) is connected to the at least one baseplate (7) by means of an elastic supporting element (8, 9), and wherein the supporting elements (8, 9) can be deflected in a joint plane or in parallel planes and the at least two mass elements (5, 6) and/or supporting elements (8, 9) respectively have at least one measuring point (10), wherein the joint plane or the parallel planes is/are respectively aligned perpendicularly to the baseplate (7), and wherein the supporting elements (8, 9) of at least one first mass element (5) and of at least one second mass element (6) are designed in such a way that the supporting element (8) of the at least one first mass element (5) and the supporting element (9) of the at least one second mass element (6), at the measuring points (10), have the same reaction characteristic with respect to a first dynamic or static component acting in a first direction of an acceleration acting in the joint plane or in the parallel planes, and have different reaction characteristics from each other in the other component of the acceleration acting perpendicularly to the first component.

2. The device according to claim 1,
**characterized in that**
the device comprises at least two first supporting elements (8) having a mass element (5) and at least one second supporting element (9) having a mass element (6) or that the device comprises at least two first and two second supporting elements (8, 9) having a mass element (5, 6).

3. The device according to claim 1 or 2,
**characterized in that**
the arrangement of the supporting elements (8, 9) and mass elements (5, 6) is formed as a three-dimensional microstructure in a support material, wherein monocrystalline silicon (Si) or quartz or glass or a lacquer is preferably used as the support material.

4. The device according to any one of the preceding claims,
**characterized in that**
two supporting elements (8, 9) respectively have the same design, but are arranged mirror-symmetrically on the at least one baseplate (7).

5. The device according to any one of the preceding claims,
**characterized in that**
the first supporting elements (8) are produced mechanically or micromechanically as a rod (8.1) or a strip (8.1), wherein in the case of a strip (8.1) the latter is elastically deformable in the plane of the strip, and the second supporting elements (9) are produced by means of an angled or bent rod or strip with the portions (9.1, 9.2).

6. The device according to claim 5,
**characterized in that**
the portion (9.1) of the rod or strip of the second supporting elements (9), in the starting area, when viewed from the baseplate (7), corresponds in terms of its shape and deformability, in each case, to the rod or strip (8.1) of the first supporting elements (8).

7. The device according to any one of claims 3 to 6,
**characterized in that**
the three-dimensional microstructure is formed in a trough of the support material, wherein the trough walls form a baseplate (7).

8. A method for recording at least one acceleration, wherein a device is used which comprises
- at least one baseplate (7) and
- at least two mass elements (5, 6),
and wherein each mass element (5, 6) is connected to the at least one baseplate (7) by means of an elastic supporting element (8, 9), the supporting elements (8, 9) can be deflected in a joint plane or in parallel planes and the at least two mass elements (5, 6) and/or supporting elements (8, 9) respectively have at least one measuring point (10), wherein the joint plane or the parallel planes is/are each aligned perpendicularly to the baseplate (7), and wherein
the supporting elements (8, 9) of at least one first mass element (5) and of at least one second mass element (6) are designed in such a way that the supporting element (8) of the at least one first mass element (5) and the supporting element (9) of the at least one second mass element (6), at the measuring points (10), have the same reaction characteristic with respect to a first component acting, dynamically or statically, in a first direction of an acceleration acting in the joint plane or in the parallel planes, and have different reaction characteristics from each other in the other component of the acceleration acting perpendicularly to the first component, and wherein data describing the deflection of the measuring points (10) of at least one first element (5, 8) and of at least one second mass element (6) and/or supporting element (9) is recorded,
by evaluating the data recorded, the component of the acceleration acting in the first direction is eliminated and,
in the case of a negligible component acting in the second direction, the result adjusted by the component acting in the first direction is used to re-determine the component acting in the first direction and the result adjusted by the component acting in the first direction is recorded as static acceleration and the component acting in the first direction is recorded as dynamic acceleration.

9. A method for recording at least one acceleration, wherein a device is used, which comprises
- at least one baseplate (7) and
- at least three mass elements (5, 6),
and wherein each mass element (5, 6) is connected to the at least one baseplate (7) by means of an elastic supporting element (8, 9), the supporting elements (8, 9) can be deflected in a joint plane or in parallel planes and the at least three mass elements (5, 6) and/or supporting elements (8, 9) respectively have at least one measuring point (10), wherein the joint plane or the parallel planes is/are respectively aligned perpendicularly to the baseplate (7), and wherein
the supporting elements (8, 9) of at least two first mass elements (5) and of at least one second mass element (6) are designed in such a way that the supporting elements (8) of the at least two first mass elements (5) and the supporting element (9) of the at least one second mass element (6), at the measuring points (10), have the same reaction characteristic with respect to a first component acting, dynamically or statically, in a first direction of an acceleration acting in the joint plane or in the parallel planes, and have different reaction characteristics from each other in the other component of the acceleration acting perpendicularly to the first component, and wherein data describing the deflection of the measuring points (10) of at least two first elements (5, 8) and of at least one second mass element (6) and/or supporting element (9) is recorded,
by evaluating the data recorded by the mass element (5) of a first of the at least two first elements (5, 8) and of the second mass element (6) and/or supporting element (9) and by evaluating the data recorded by the mass element (5) of a second of the at least two first elements (5, 8) and of the second mass element (6) and/or supporting element (9), the component of the acceleration acting in the first direction is, in each case, eliminated and
by evaluating the two results adjusted by the component acting in the first direction, the component acting in the second direction is eliminated and
the result adjusted by the component acting in the second direction is used to re-determine the components acting in the first and second directions and the result adjusted by the components acting in the first and second directions is recorded as static acceleration and the components acting in the first and second directions are recorded as dynamic acceleration.

10. The method according to claim 9,
**characterized in that**
at least two first and second mass elements (5, 6) and supporting elements (8, 9) are provided and
by evaluating the data recorded by the mass element (5) of a first of the at least two first elements (5, 8) and of a first of the at least two second mass elements (6) and/or supporting elements (9) and by evaluating the data recorded by the mass element (5) of a second of the at least two first elements (5, 8) and of a second of the at least two second mass elements (6) and/or supporting elements (9), the component of the acceleration acting in the first direction is, in each case, eliminated and
by evaluating the two results adjusted by the component acting in the first direction, the component acting in the second direction is eliminated and
the result adjusted by the component acting in the second direction is used to re-determine the components acting in the first and second directions and the result adjusted by the components acting in the first and second directions is recorded as static acceleration and the components acting in the first and second directions are recorded as dynamic acceleration.

11. The method according to any one of claims 8 to 10,
**characterized in that**
the angle of at least one baseplate (7) is determined with respect to the static acceleration.

12. The use of a device according to any one of claims 1 to 7, wherein at least one position parameter at least of parts of the device in the space is determined.

13. The use according to claim 12,
**characterized in that**
the position determination comprises a determination of a component of the acceleration, which is produced by gravity, and/or
that the use comprises at least one of the following operations:
- a control of processes,
- an analysis of general movements of bodies,
- an analysis of a movement, in order to assign a specific function to the movement and/or to execute an intended movement by means of technical means in a control circuit,
- recording of a change in position of an object,
- detecting of an oblique position of an object,
- stabilizing of the position of an object,
- an analysis of writing movements.

14. A computer program which makes it possible for a data processing device, after having been loaded into storage means of the data processing device, to perform a method for recording at least one acceleration according to any one of claims 8 to 11 and/or which configures a suitable device for separate recording of a static and a dynamic acceleration according to any one of claims 1 to 7, after the computer program has been loaded into storage means of the device, such that the device can be utilized for a use according to any one of claims 12 or 13.

15. A computer-readable storage medium on which a program is stored which makes it possible for a data processing device, after having been loaded into storage means of the data processing device, to carry out a method for recording at least one acceleration according to any one of claims 8 to 11 and/or on which a program is stored, which configures a suitable device for separate recording of a static and a dynamic acceleration according to any one of claims 1 to 7, after the computer program has been loaded into storage means of the device, such that the device can be utilized for a use according to any one of claims 12 or 13.

## Revendications

1. Dispositif servant à détecter au moins une accélération, comprenant
- au moins une plaque de base (7) et
- au moins deux éléments de masse (5, 6),
chaque élément de masse (5, 6) étant raccordé à la au moins une plaque de base (7) par le biais d'un élément de soutien (8, 9) élastique, et les éléments de soutien (8, 9) pouvant être déviés dans un plan commun ou dans des plans parallèles, et les au moins deux éléments de masse (5, 6) et/ou éléments de soutien (8, 9) présentant respectivement au moins un point de mesure (10), le plan commun ou les plans parallèles étant respectivement orientés perpendiculairement à la plaque de base (7), et
les éléments de soutien (8, 9) d'au moins un premier élément de masse (5) et d'au moins un deuxième élément de masse (6) étant conçus de telle sorte que l'élément de soutien (8) du au moins un premier élément de masse (5) et l'élément de soutien (9) du au moins un deuxième élément de masse (6) présentent la même caractéristique de réaction, dans les points de mesure (10) par rapport à une première composante, agissant dans une première direction dynamiquement ou statiquement, d'une accélération agissant dans le plan commun ou dans les plans parallèles, et présentent des caractéristiques de réaction différentes les unes des autres dans l'autre composante de l'accélération agissant perpendiculairement à la première composante.

2. Dispositif selon la revendication 1,
**caractérisé en ce que**
le dispositif comprend au moins deux premiers éléments de soutien (8) avec élément de masse (5) et au moins un deuxième élément de soutien (9) avec élément de masse (6), ou **en ce que** le dispositif comprend au moins deux premiers et deux deuxièmes éléments de soutien (8, 9) avec élément de masse (5, 6).

3. Dispositif selon la revendication 1 ou 2,
**caractérisé en ce que**
l'agencement des éléments de soutien (8, 9) et des éléments de masse (5, 6) est constitué en tant que microstructure tridimensionnelle dans un matériau support, du silicium (Si) monocristallin ou du quartz ou du verre ou une laque étant utilisé(e) de préférence en tant que matériau porteur.

4. Dispositif selon une des revendications précédentes,
**caractérisé en ce que**
respectivement deux éléments de soutien (8, 9) sont réalisés de façon identique, mais sont disposés en symétrie miroir sur la au moins une plaque de base (7).

5. Dispositif selon une des revendications précédentes,
**caractérisé en ce que**
les premiers éléments de soutien (8) sont réalisés en réalisation mécanique ou micromécanique en tant que barre (8.1) ou en tant que ruban (8.1), en cas de ruban (8.1) celui-ci étant élastiquement déformable dans le plan du ruban, et les deuxièmes éléments de soutien (9) étant réalisés par une barre ou un ruban coudé(e) ou courbé(e) avec les tronçons (9.1, 9.2).

6. Dispositif selon la revendication 5,
**caractérisé en ce que**
le tronçon (9.1) de la barre ou du ruban des deuxièmes éléments de soutien (9) dans la zone initiale, vue à partir de la plaque de base (7), correspond, par la forme et l'aptitude à la déformation, respectivement à la barre ou au ruban (8.1) des premiers éléments de soutien (8).

7. Dispositif selon une des revendications 3 à 6,
**caractérisé en ce que**
la microstructure tridimensionnelle est constituée dans une cuvette du matériau porteur, les parois de cuvette formant une plaque de base (7).

8. Procédé servant à détecter au moins une accélération, un dispositif étant utilisé, qui comprend
- au moins une plaque de base (7) et
- au moins deux éléments de masse (5, 6),
chaque élément de masse (5, 6) étant raccordé à la au moins une plaque de base (7) par le biais d'un élément de soutien (8, 9) élastique, les éléments de soutien (8, 9) pouvant être déviés dans un plan commun ou dans des plans parallèles, et les aux moins deux éléments de masse (5, 6) et/ou éléments de soutien (8, 9) présentant respectivement au moins un point de mesure (10), le plan commun ou les plans parallèles étant respectivement orientés perpendiculairement à la plaque de base (7),
les éléments de soutien (8, 9) d'au moins un premier élément de masse (5) et d'au moins un deuxième élément de masse (6) étant conçus de telle sorte que l'élément de soutien (8) du au moins un premier élément de masse (5) et l'élément de soutien (9) du au moins un deuxième élément de masse (6) présentent la même caractéristique de réaction, dans les points de mesure (10) par rapport à une première composante, agissant dynamiquement ou statiquement dans une première direction, d'une accélération agissant dans le plan commun ou dans les plans parallèles, et présentent des caractéristiques de réaction différentes les unes des autres dans l'autre composante de l'accélération agissant perpendiculairement à la première composante, et la déviation des points de mesure (10) détectant des données descriptives d'au moins un premier élément (5, 8) et d'au moins un deuxième élément de masse (6) et/ou élément de soutien (9),
élimine, par analyse des données détectées, la composante de l'accélération agissant dans la première direction, et,
en cas de composante négligeable agissant dans la deuxième direction, le résultat nettoyé de la composante agissant dans la première direction est utilisé pour retrouver la composante agissant dans la première direction, et le résultat nettoyé de la composante agissant dans la première direction est détecté en tant qu'accélération statique, et la composante agissant dans la première direction est détectée en tant qu'accélération dynamique.

9. Procédé servant à détecter au moins une accélération, un dispositif étant utilisé, qui comprend
- au moins une plaque de base (7) et
- au moins trois éléments de masse (5, 6),
chaque élément de masse (5, 6) étant raccordé à la au moins une plaque de base (7) par le biais d'un élément de soutien (8, 9) élastique, les éléments de soutien (8, 9) pouvant être déviés dans un plan commun ou dans des plans parallèles, et les au moins trois éléments de masse (5, 6) et/ou éléments de soutien (8, 9) présentant respectivement au moins un point de mesure (10), le plan commun ou les plans parallèles étant respectivement orientés perpendiculairement à la plaque de base (7),
les éléments de soutien (8, 9) des au moins deux premiers éléments de masse (5) et d'au moins un deuxième élément de masse (6) étant conçus de telle sorte que les éléments de soutien (8) des au moins deux premiers éléments de masse (5) et l'élément de soutien (9) du au moins un deuxième élément de masse (6) présentent la même caractéristique de réaction, dans les points de mesure (10) par rapport à une première composante, agissant dynamiquement ou statiquement dans une première direction, d'une accélération agissant dans le plan commun ou dans les plans parallèles, et présentent des caractéristiques de réaction différentes les unes des autres dans l'autre composante de l'accélération agissant perpendiculairement à la première composante, et
la déviation des points de mesure (10) détectant des données descriptives d'au moins deux premiers éléments de masse (5) et d'au moins un deuxième élément de masse (6) et/ou élément de soutien (9),
élimine respectivement la composante de l'accélération agissant dans la première direction, par analyse des données détectées de l'élément de masse (5) d'un premier des au moins deux premiers éléments (5, 8) et du deuxième élément de masse (6) et/ou élément de soutien (9) et par l'analyse des données détectées de l'élément de masse (5) d'un deuxième des au moins deux premiers éléments (5, 8) et du deuxième élément de masse (6) et/ou élément de soutien (9), et
élimine la composante agissant dans la deuxième direction, par l'analyse des deux résultats nettoyés de la composante agissant dans la première direction, et le résultat nettoyé de la composante agissant dans la deuxième direction est utilisé pour retrouver les composantes agissant dans la première et la deuxième direction, et le résultat nettoyé des composantes agissant dans la première et la deuxième direction est détecté en tant qu'accélération statique, et les composantes agissant dans la première et la deuxième direction sont détectées en tant qu'accélération dynamique.

10. Procédé selon la revendication 9,
**caractérisé en ce que**
au moins deux premiers et deuxièmes éléments de masse (5, 6) et éléments de soutien (8, 9) sont prévus et,
par l'analyse des données détectées de l'élément de masse (5) d'un premier des aux moins deux premiers éléments (5, 8) et d'un premier des au moins deux deuxièmes éléments de masse (6) et/ou éléments de soutien (9), et par l'analyse des données détectées de l'élément de masse (5) d'un deuxième des au moins deux premiers éléments (5, 8) et d'un deuxième des au moins deuxièmes éléments de masse (6) et/ou éléments de soutien (9), respectivement la composante de l'accélération agissant dans la première direction est éliminée et,
par l'analyse des deux résultats nettoyés de la composante agissant dans la première direction, la composante agissant dans la deuxième direction est éliminée, et le résultat nettoyé de la composante agissant dans la deuxième direction est utilisé pour la nouvelle détermination des composantes agissant dans la première et la deuxième direction, et le résultat nettoyé des composantes agissant dans la première et la deuxième direction est détecté en tant qu'accélération statique, et les composantes agissant dans la première et la deuxième direction sont détectées en tant qu'accélération dynamique.

11. Procédé selon une des revendications 8 à 10,
**caractérisé en ce que**
l'angle d'au moins une plaque de base (7) par rapport à l'accélération statique est déterminé.

12. Procédé d'un dispositif selon une des revendications 1 à 7, au moins un paramètre de position au moins de pièces du dispositif dans l'espace est déterminé.

13. Utilisation selon la revendication 12,
**caractérisée en ce que**
la détermination de position comprend une détermination d'une composante de l'accélération qui est suscitée par la gravitation et/ou en ce que l'utilisation comprend au moins un des processus suivants :
- une commande de process,
- une analyse de mouvements généraux de corps,
- une analyse d'un mouvement pour affecter au mouvement une certaine fonction et/ou pour l'exécution d'un mouvement voulu, par des moyens techniques dans un circuit de régulation,
- une détection d'une variation de position d'un objet,
- une détection de position oblique d'un objet,
- une stabilisation de position d'un objet,
- une analyse de mouvements d'écriture.

14. Programme informatique qui, après avoir été chargé dans des moyens de mémoire d'un dispositif de traitement de données, permet au dispositif de traitement de données d'exécuter un procédé servant à détecter au moins une accélération selon une des revendications 8 à 11 et/ou de configurer un dispositif approprié pour la détection séparée d'une accélération statique et d'une accélération dynamique selon une des revendications 1 à 7 après que le programme informatique a été chargé dans des moyens de mémoire de telle sorte que le dispositif peut être utilisé pour une utilisation selon une des revendications 12 ou 13.

15. Support de mémoire informatique sur lequel est enregistré un programme qui qui, après avoir été chargé dans des moyens de mémoire d'un dispositif de traitement de données, permet au dispositif de traitement de données d'exécuter un procédé servant à détecter au moins une accélération selon une des revendications 8 à 11 et/ou sur lequel est enregistré un programme qui configure un dispositif approprié pour la détection séparée d'une accélération statique et d'une accélération dynamique selon une des revendications 1 à 7 après que le programme informatique a été chargé dans des moyens de mémoire de telle sorte que le dispositif peut être utilisé pour une utilisation selon une des revendications 12 ou 13.
